# EUROPEAN PATENT SPECIFICATION

(11) **EP 4 468 151 B1**
(45) Date of publication and mention of the grant of the patent: **07.10.2026**
(21) Application number: 24167707.9
(22) Date of filing: 28.03.2024
(51) Int. Cl.: G06F 9/50, H04L 41/0897, H04L 67/1029, H04L 67/568, G06F 11/30, G06F 11/34, H04L 41/082, H04L 41/08, H04L 43/103, H04L 43/106, H04L 43/16

(54) **DATA PROCESSING METHOD AND APPARATUS, ELECTRONIC DEVICE, AND COMPUTER READABLE MEDIUM**
DATENVERARBEITUNGSVERFAHREN UND -VORRICHTUNG, ELEKTRONISCHE VORRICHTUNG UND COMPUTERLESBARES MEDIUM
PROCÉDÉ ET APPAREIL DE TRAITEMENT DE DONNÉES, DISPOSITIF ÉLECTRONIQUE ET SUPPORT LISIBLE PAR ORDINATEUR

(30) Priority: 31.03.2023 CN 202310341808
(43) Date of publication of application: 27.11.2024
(73) Proprietor: Beijing Volcano Engine Technology Co., Ltd., Beijing 100190 (CN)
(72) Inventor: SUN, Leilei, Beijing 100028 (CN); ZHAO, Siying, Beijing 100028 (CN); LUO, Xuan, Beijing 100028 (CN)
(74) Representative: Marks & Clerk LLP

(56) References cited:
- US-A1- 2020 067 778
- US-B2- 9 769 085
- "eXtensible Access Control Markup Language (XACML 3.0)", ITU-T DRAFT ; STUDY PERIOD 2013-2016, INTERNATIONAL TELECOMMUNICATION UNION, GENEVA ; CH, vol. plen/17, 2 September 2013 (2013-09-02), pages 1 - 171, XP044086040
- AMAZON: "Using Amazon CloudWatch alarms", 20 March 2023 (2023-03-20), pages 1 - 10, XP093303640, Retrieved from the Internet <URL:https://web.archive.org/web/20230320093137/https://docs.aws.amazon.com/AmazonCloudWatch/latest/monitoring/AlarmThatSendsEmail.html>

## Description

### CROSS REFERENCE TO RELATED APPLICATION

This application claims priority to Chinese Patent Application No. 202310341808.5, filed on March 31, 2023, the entire disclosure of which is incorporated herein by reference as part of the present disclosure.

### TECHNICAL FIELD

The present disclosure relates to the technical field of computers, and in particular, to a data processing method and an apparatus, an electronic device, and a computer readable medium.

### BACKGROUND

Actually, a computational burden presented by big data computing in some application scenarios is not constant but has significant peaks and valleys. Consequently, a cluster performing big data computing may have the problems of insufficient computing resources at a busy time and wasting of computing resources at an idle time. Therefore, to overcome the adverse effects caused by the problems, computing resource adjustment processing may be performed on the cluster at certain moments (i.e., elastic scaling processing in terms of computing resources may be performed for the cluster).

In some technical solutions, when the computing resource adjustment processing is performed on a cluster may be determined according to some preset rules (e.g., a rule of a load scaling type).

However, since the above technical solutions have defects (e.g., a corresponding polling mechanism is established for each of different indicator items of different clusters), these rules may take a long time in determination, which in turn results in bad computing resource adjustment performance for the clusters.

Document US 2020/0067778 A1 relates to decentralised auto-scaling of computing resources. It discloses monitoring metrics associated with instances or zones, maintaining counter values for such metrics, comparing the monitored values with scaling policies, and executing scaling commands when policy conditions are met. In one implementation, a scaling component may periodically query a zone or instances to retrieve metric or counter information for use in determining whether scaling is required.

Another document from Amazon, "Using Amazon CloudWatch alarms", archived 20 March 2023, XP093303640, relates to monitoring cloud-service metrics and evaluating alarms. It discloses evaluating metric data over recent measurement periods and determining an alarm state according to whether a required number of recent measurements satisfies an alarm condition.

Neither of these documents discloses a cache-maintenance mechanism in which a newly configured load-type rule item for one of a plurality of jointly managed clusters is integrated into an already running shared polling mechanism by performing historical data completion based on a previous polling time, obtaining plural-cluster polling results as timestamped metric tuples, maintaining a per-rule timestamp-list cache, deleting expired timestamps from that list, and determining whether the rule item is met by counting the remaining timestamps.

### SUMMARY

It is an object of the present invention to provide a data processing method, a data processing apparatus, an electronic device, a computer-readable storage medium and a computer program product.

The object is achieved by the features of the respective independent claims. Further embodiments are defined in the respective dependent claims.

.

Compared with the prior art, the present disclosure has at least the following advantages.

In the technical solutions provided in the present disclosure, for a cluster management device, after the elastic scaling rule is created for the target cluster, firstly, the cache space corresponding to the target cluster is configured according to the elastic scaling rule. Secondly, the indicator detection state data of the load type rule item within the completion time range is obtained according to the cluster identifier of the target cluster and the indicator item identifier carried by the load type rule item in the elastic scaling rule, and the indicator detection state data is stored to the cache space corresponding to the target cluster such that a state (e.g., at which moments the load indicator condition involved in the load type rule item is met) presented by the load type rule item within a time range, [triggering time of previous polling-indicator detection time period, triggering time of previous polling], is recorded in the cache space. Subsequently, the indicator detection update result corresponding to the target cluster is continuously obtained by polling such that the indicator detection update result is used for describing the indicator detection state update presented by the elastic scaling rule during the polling interval, and the storage content in the cache space corresponding to the target cluster is updated according to the indicator detection update result such that the content recorded for the indicator detection time period in the storage space is continuously updated. Thus, the instantaneity of the storage content in the cache space can be ensured so that the elastic scaling decision-making result corresponding to the target cluster can be determined in real time according to the storage content in the cache space. Thus, by means of once completion plus continuous polling updating, not only can the purpose of elastic scaling decision making for a cluster be achieved, but also the purpose of directly adding the elastic scaling decision-making process for the target cluster to an existing polling mechanism can be achieved. As a result, an adverse effect caused by creating a new polling mechanism for the target cluster can be effectively avoided, which in turn is conducive to improving the elastic scaling decision-making effect.

As can be seen, for the cluster management device, the cluster management device may adopt the same polling mechanism to perform elastic scaling decision-making processing on all clusters managed by the cluster management device and each having an elastic scaling configuration. Thus, the purpose of performing centralized polling processing by the cluster management device on all indicator items of all the clusters can be achieved, which in turn is conducive to improving the elastic scaling decision-making effect.

In addition, for a cluster, since a data completion process is performed when a rule is created for the cluster such that the indicator detection state data in the time range [triggering time of previous polling-indicator detection time period, triggering time of previous polling] is stored in the cache space corresponding to the cluster, storage updating may be carried out in a subsequent continuous polling process merely by obtaining the indicator detection state update presented during the polling interval. Thus, the purpose of performing centralized polling for all indicators under a cluster can be achieved. Accordingly, the elastic scaling decision-making efficiency for a cluster can be effectively improved.

Moreover, for the above target cluster, since the involved completion time range is determined based on the indicator detection time period carried by the load type rule item and the triggering time of previous polling such that an end moment involved in the completion time range is a start moment of current polling, an adverse effect caused by a rule creation moment not belong to a triggering timing of certain polling (e.g., a resource overhead caused by that the existing polling mechanism in the cluster management device cannot be used) can be effectively overcome. Thus, the purpose of successfully joining in the existing polling mechanism on the premise of missing no data can be achieved, which in turn is conducive to improving the elastic scaling decision-making effect of the cluster management device for a cluster.

Also, for the above cluster management device, the cluster management device can obtain the indicator detection state updates presented by all clusters during the polling interval merely by means of an interface (e.g., the polling data interface) in each polling process. Thus, the purpose of completing the elastic scaling decision-making process for all the clusters using the same polling mechanism can be achieved by means of the same interface. As a result, an adverse effect caused by configuring a polling mechanism for each cluster can be effectively avoided, which in turn is conducive to improving the elastic scaling decision-making effect of the cluster management device for the cluster.

### BRIEF DESCRIPTION OF THE DRAWINGS

To describe the technical solutions in the embodiments of the present disclosure or in the prior art more clearly, the accompanying drawings required in the description of the embodiments or the prior art will be described briefly below. Apparently, other accompanying drawings can also be derived from these drawings by those ordinarily skilled in the art without creative efforts.
FIG. 1 is a flowchart of a data processing method provided in an embodiment of the present disclosure;
FIG. 2 is a schematic diagram of an elastic scaling rule provided in an embodiment of the present disclosure;
FIG. 3 is a schematic diagram of a cache space corresponding to a cluster provided in an embodiment of the present disclosure;
FIG. 4 is a schematic diagram of updating a storage content in a cache area corresponding to a load type rule item provided in an embodiment of the present disclosure;
FIG. 5 is a structural schematic diagram of a data processing apparatus provided in an embodiment of the present disclosure; and
FIG. 6 is a structural schematic diagram of an electronic device provided in an embodiment of the present disclosure.

### DETAILED DESCRIPTION

For ease of understanding, technical terms involved in the present disclosure are firstly explained below.

Elastic scaling refers to adjusting a computational scale of a cluster (e.g., adjusting a number of task nodes).

A time scaling type is used for performing elastic scaling triggering according to a certain time point or a certain time period. In addition, the time scaling type may be further subdivided into the following two types. One is a time point scaling type which specifically refers to performing elastic scaling processing once or repeatedly at a fixed time point; for example, a scaling action is triggered once at 8 o'clock on January 1, 2023; or the scaling action is triggered repeatedly at 8 o'clock every Monday. The other one is a time period scaling type which specifically refers to performing elastic scaling processing repeatedly within a fixed time period and which may be used in combination with the load scaling type. For example, a scaling action is triggered in a time period from 8 o'clock to 9 o'clock on the first day of every month. A triggering interval may be system-defined, such as 5 minutes. That is, the scaling action is triggered every 5 minutes within this time period.

The load scaling type refers to performing elastic scaling triggering according to a certain load indicator (e.g., a Yet Another Resource Negotiator (YARN) indicator) previously designated by a user for a certain cluster and a corresponding threshold thereof. In other words, if a number of times that an indicator value of the load indicator is greater than the threshold (or less than the threshold) within a certain time period reaches a value designated by the user, the scaling action is triggered.

A sampling interval refers to a time interval according to which data is collected for a cluster. For example, when collection is performed for a certain load indicator value of a cluster, sampling and collection may be performed at a fixed frequency on a cluster side by means of an indicator monitoring service (e.g., prometheus). In this situation, an interval time period between two adjacent times of sampling may be called the sampling interval.

A polling interval refers to an interval time between two adjacent times of polling when a cluster management device performs polling on related data (e.g., an indicator value) of each cluster. As can be seen, when the polling interval is 5 minutes and the above sampling interval is 30 seconds, in one round of polling, the cluster management device may find out 10 indicator values of a certain load indicator for a cluster.

Based on the above technical terms, the technical solutions of the present disclosure are described below.

It is found by research that under some technical solutions, to better improve the elastic scaling decision-making effect, a triggering logic for a rule under the load scaling type may be realized by means of polling. However, this triggering way has a defect which will be described below in combination with an example.

As an example, it is assumed that a number of clusters each having an elastic scaling configuration is 1000, each cluster has 10 rules each having 3 sub-rules (spaced by "or"), and each sub-rule involves 3 load indicators (spaced by "and"). As can be known based on the assumption, a number of data queries required in each elastic decision-making process is: 1000*10*3*3=90000 (queries). Since sampling time periods (i.e., time ranges in which needed to perform sampling for the indicator items) set by a user for indicator items in different rules for different clusters may be different, a centralized query cannot be performed for all clusters and all indicators, and 90000 queries have to be performed. As a result, a corresponding polling mechanism needs to be established for each of different indicator items of different clusters, which in turn results in a long time taken by an elastic decision-making process for all the clusters, thus leading to poor elastic scaling decision-making performance.

On this basis, the present disclosure provides a data processing method applied to a cluster management device. The data processing method is specifically as follows: after an elastic scaling rule is created for a target cluster, firstly, a cache space corresponding to the target cluster is configured according to the elastic scaling rule. Secondly, indicator detection state data of a load type rule item within a completion time range is obtained according to a cluster identifier of the target cluster and an indicator item identifier carried by the load type rule item in the elastic scaling rule, and the indicator detection state data is stored to the cache space corresponding to the target cluster such that a state (e.g., at which moments the load indicator condition involved in the load type rule item is met) presented by the load type rule item within a time range [triggering time of previous polling-indicator detection time period, triggering time of previous polling] is recorded in the cache space. Subsequently, an indicator detection update result corresponding to the target cluster is continuously obtained by polling such that the indicator detection update result is used for describing an indicator detection state update presented by the elastic scaling rule during a polling interval, and a storage content in the cache space corresponding to the target cluster is updated according to the indicator detection update result such that the content recorded for the indicator detection time period in the storage space is continuously updated. Thus, the instantaneity of the storage content in the cache space can be ensured so that the elastic scaling decision-making result corresponding to the target cluster can be determined in real time according to the storage content in the cache space. Thus, by means of once completion plus continuous polling updating, not only can the purpose of elastic scaling decision making for a cluster be achieved, but also the purpose of directly adding the elastic scaling decision-making process for the target cluster to an existing polling mechanism can be achieved. As a result, an adverse effect caused by creating a new polling mechanism for the target cluster can be effectively avoided, which in turn is conducive to improving the elastic scaling decision-making effect.

As can be seen, for the cluster management device, the cluster management device may adopt the same polling mechanism to perform elastic scaling decision-making processing on all clusters managed by the cluster management device and each having an elastic scaling configuration. Thus, the purpose of performing centralized polling processing by the cluster management device on all indicator items of all the clusters can be achieved, which in turn is conducive to improving the elastic scaling decision-making effect.

In addition, for a cluster, since a data completion process is performed when a rule is created for the cluster such that the indicator detection state data in the time range [triggering time of previous polling-indicator detection time period, triggering time of previous polling] is stored in the cache space corresponding to the cluster, storage updating may be carried out in a subsequent continuous polling process merely by obtaining the indicator detection state update presented during the polling interval. Thus, the purpose of performing centralized polling for all indicators under a cluster can be achieved. Accordingly, the elastic scaling decision-making efficiency for a cluster can be effectively improved.

Moreover, since the completion time range is determined based on the indicator detection time period carried by the load type rule item and the triggering time of previous polling such that an end moment involved in the completion time range is a start moment of current polling, an adverse effect caused by a rule creation moment not belong to a triggering timing of certain polling (e.g., a resource overhead caused by that the existing polling mechanism in the cluster management device cannot be used) can be effectively overcome. Thus, the purpose of successfully joining in the existing polling mechanism on the premise of missing no data can be achieved, which in turn is conducive to improving the elastic scaling decision-making effect of the cluster management device for a cluster.

Also, the present disclosure does not limit an executive main body of the above data processing method. For example, the data processing method provided in the embodiments of the present disclosure may be applied to a device having a data processing function such as a terminal device or a server. For another example, the data processing method provided in the embodiments of the present disclosure may be implemented by means of a data communication process between different devices (e.g., a terminal device and a server, two terminal devices, or two servers). The terminal device may be a smart phone, a computer, a personal digital assistant (PDA), or a tablet computer. The server may be an independent server, a cluster server, or a cloud server.

To enable a person skilled in the art to better understand the solutions of the present disclosure, the technical solutions in the embodiments of the present disclosure will be described clearly and completely with reference to the accompany drawings in the embodiments of the present disclosure. Apparently, the described embodiments are some rather than all of the embodiments of the present disclosure. All other embodiments derived from the embodiments in the present disclosure by those of ordinary skill in the art without creative efforts should fall within the protection scope of the present disclosure.

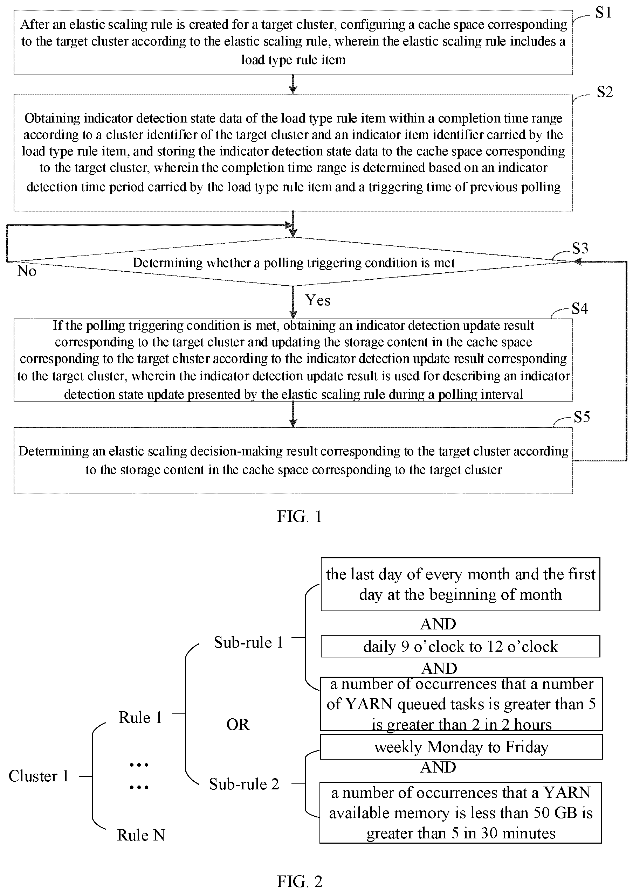

To better understand the technical solutions provided in the present disclosure, the data processing method provided in the present disclosure is firstly described in combination with some figures. As shown in FIG. 1, an embodiment of the present disclosure provides a data processing method applied to a cluster management device, including S1 to S5 below. FIG. 1 is a flowchart of the data processing method provided in the embodiment of the present disclosure.

S1: after an elastic scaling rule is created for a target cluster, configuring a cache space corresponding to the target cluster according to the elastic scaling rule, wherein the elastic scaling rule includes a load type rule item.

The cluster management device is configured to manage at least one cluster. Moreover, the present disclosure does not limit the cluster management device, which may be implemented by, e.g., any existing or future device capable of uniformly managing some clusters.

In addition, for the cluster management device provided in the present disclosure, if the cluster management device is configured to manage a plurality of clusters, the cluster management device may complete some management affairs (e.g., affairs in terms of elastic scaling decision making) of all the clusters using a same polling mechanism by means of the processing manner shown at S1 to S5. Thus, an adverse effect caused by that different polling mechanisms need to be adopted for some management affairs of all the clusters can be effectively avoided, thereby being conducive to improving the management performance (in particular, elastic scaling decision-making performance) of the cluster management device for these clusters.

The target cluster refers to a cluster needing to join in the existing polling mechanism in the cluster management device. Moreover, the present disclosure does not limit the target cluster. For example, the target cluster may refer to a newly created cluster having the elastic scaling configuration so that the target cluster can perform the elastic scaling processing under the assistance of the cluster management device. For another example, the target cluster may refer to a cluster to which an elastic scaling rule is just added so that the cluster management device can perform elastic scaling decision making for the cluster based on the elastic scaling rule.

The elastic scaling rule refers to a rule set by the user for a cluster (e.g., the target cluster) and according to which the elastic scaling decision making is performed for the cluster. For example, when the above target cluster is a cluster 1 shown in FIG. 2, the elastic scaling rule corresponding to the target cluster may include a rule 1 to a rule N shown in FIG. 2. N is a positive integer.

In addition, the present disclosure does not limit the above elastic scaling rule. For ease of understanding, the elastic scaling rule is described below exemplarily.

For example, the elastic scaling rule may include at least the load type rule item, enabling the elastic scaling rule to trigger elastic scaling at least according to one or more load indicator items.

The load type rule item refers to the rule of the load scaling type. For example, the load type rule item may be the rule item "a number of occurrences that a number of YARN queued tasks is greater than 5 is greater than 2 in 2 hours" shown in FIG. 2, or the rule item "a number of occurrences that a YARN available memory is less than 50 Gigabytes (GB) is greater than 5 in 30 minutes" shown in FIG. 2.

In addition, the present disclosure does not limit an implementation of the above load type rule item. For example, the load type rule item may be used for representing whether a certain indicator item meets a certain condition in a certain time period. As can be seen, in a possible implementation, the load type rule item may carry an indicator item identifier, an indicator detection time period, and an indicator determination condition. The indicator item identifier is used for uniquely identifying a load indicator (e.g., the number of YARN queued tasks). The indicator detection time period is used for representing a time period of detection for the load indicator (e.g., within 2 hours). The indicator determination condition is used for representing a condition (e.g., the number of YARN queued tasks is greater than 5) designated by the user for the load indicator and needing to be paid attention to when performing elastic scaling decision making.

Moreover, the present disclosure does not limit a number of the above load type rule items. For example, one elastic scaling rule may include one or more load type rule items.

For another example, the elastic scaling rule may include at least the load type rule item and a time type rule item, enabling the elastic scaling rule to trigger elastic scaling simultaneously according to states of some load indicator items and a certain time period.

The time type rule item refers to a rule of the time scaling type. For example, the time type rule item may be a rule item such as "the last day of every month and the first day at the beginning of month", "daily 9 o'clock to 12 o'clock", or "weekly Monday to Friday" shown in FIG. 2.

In addition, the present disclosure does not limit the above time type rule item. For example, in some application scenarios, the time type rule item may be used for defining a certain time period. As can be seen, in a possible implementation, the time type rule item is of the time period scaling type, and the time type rule item may carry an elastic scaling required time period. The elastic scaling required time period refers to in which time range the elastic scaling processing needs to be performed.

Moreover, the present disclosure does not limit a number of the above time type rule items. For example, one elastic scaling rule may include one or more time type rule items.

As can be known based on the related content of the above elastic scaling rule, in a possible implementation, the elastic scaling rule may include one or more rule items of the load scaling type. In another possible implementation, the elastic scaling rule may include at least one rule item of the load scaling type and at least one rule item of the time scaling type, enabling the elastic scaling rule to belong to a rule of a time plus load hybrid type.

In addition, the present disclosure does not limit a creation process of the above elastic scaling rule. For example, in some application scenarios, the user may configure the elastic scaling rule for a certain cluster on a related interface by means of an expression manner of a natural language and a rule engine (e.g., an expression used by the rule 1 shown in FIG. 2) to complete the creation process for the elastic scaling rule.

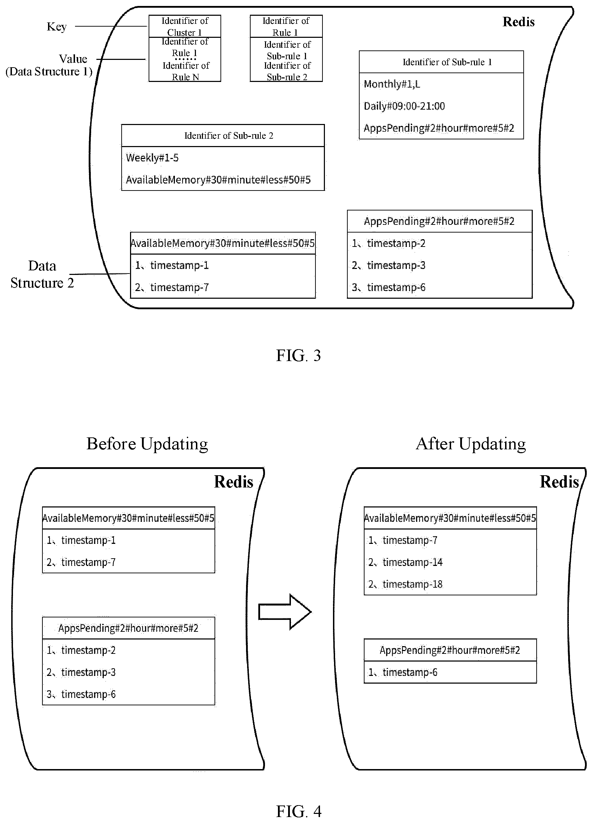

The above "cache space corresponding to the target cluster" is used for storing the related data of the elastic scaling rule created for the target cluster (e.g., a timestamp such as "timestamp-1" shown in FIG. 3) so that the elastic scaling decision making for the target cluster can be completed more rapidly by means of the storage content in the "cache space corresponding to the target cluster".

In addition, the present disclosure does not limit the configuration process of the "cache space corresponding to the target cluster". For example, to better improve the elastic scaling decision-making efficiency, the cache space corresponding to the target cluster may be configured based on the principle of taking space in exchange for time. For ease of understanding, the following description is made in combination with an example.

As an example, the configuration process of the above "cache space corresponding to the target cluster" may specifically include step 11 to step 12.

Step 11: parsing the elastic scaling rule created for the target cluster to obtain a rule tree, wherein the elastic scaling rule includes a plurality of rule expression objects; the plurality of rule expression objects include the load type rule item; and the rule tree includes nodes corresponding to the rule expression objects.

The rule expression object refers to an object existing in the above "elastic scaling rule created for the target cluster" and used for expressing a certain rule, and the present disclosure does not limit the rule expression object. For example, the rule expression object may be a certain rule item (e.g., the rule item "a number of occurrences that a number of YARN queued tasks is greater than 5 is greater than 2 in 2 hours" shown in FIG. 2), or an expression composed of a plurality of rule items (e.g., the rule expression "sub-rule 1" shown in FIG. 2), or a set composed of a plurality of expressions (e.g., the rule set "cluster 1" shown in FIG. 2).

As can be seen, for the elastic scaling rule created for the target cluster, the elastic scaling rule may include a plurality of rule expression objects (e.g., all objects shown in FIG. 2), and there is a certain association relationship (e.g., an affiliation relationship, or, and) between some objects of the plurality of rule expression objects.

The rule tree refers to representing the above elastic scaling rule in a tree structure, enabling the rule tree to not only represent all the rule expression objects existing in the elastic scaling rule but also represent an association relationship between different rule expression objects in the elastic scaling rule. For example, when the above target cluster is the cluster 1 shown in FIG. 2, the rule tree corresponding to the target cluster may be the tree structure shown in FIG. 2.

In addition, for a rule tree corresponding to a cluster, each node in the rule tree may represent a rule expression object existing in the elastic scaling rule created for the cluster. Moreover, for a node in the rule tree, if the node belongs to a root node, the rule expression object corresponding to the node is the cluster identifier of the cluster, enabling the node to represent a rule set created for the cluster. If the node is a leaf node, the rule expression object corresponding to the node is a rule item of the load scaling type or a rule item of the time scaling type existing in the cluster, enabling the node to represent a load indicator or a time period needing to be referred when performing elastic scaling decision making for the cluster. If a sub-node corresponding to the node exists in the rule tree, the rule expression object corresponding to the node is an expression composed of a plurality of rule items.

Moreover, the present disclosure does not limit the implementation of "parsing" in the above step 11. For example, the parsing may be implemented by any existing or future method capable of performing parsing for a rule set. For another example, parsing may be performed according to a preset rule parsing strategy, which will not be particularly limited in the present disclosure.

Step 12: configuring the cache space corresponding to the target cluster according to the rule tree, wherein the cache space includes cache areas corresponding to the rule expression objects.

In the present disclosure, for the above target cluster, if the elastic scaling rule created for the target cluster includes a plurality of rule expression objects, after the rule tree is parsed from the elastic scaling rule, the cache space corresponding to the target cluster may be configured according to the rule tree, enabling the cache space to include the cache areas corresponding to the rule expression objects (e.g., the cache areas shown in FIG. 3). Thus, the storage contents in these cache areas are enabled to represent the rule tree. For ease of understanding, the following description is made in combination with an example.

As an example, in the case where the above target cluster is the cluster 1 shown in FIG. 2, the elastic scaling rule created for the target cluster is the rule shown in FIG. 2 and the cache space corresponding to the target cluster is implemented by means of a remote dictionary server (Redis), the cache space corresponding to the target cluster may include the cache areas shown in FIG. 3. Moreover, the storage contents of the different cache areas shown in FIG. 3 are as follows.
(1) Data is cached using a data structure 1 (e.g., set data structure) in the cache areas corresponding to the rule expression objects represented by other nodes than the leaf nodes in the rule tree. For example, as shown in FIG. 3, the cache area "identifier of cluster 1→set<identifier of rule 1, ......, identifier of rule N>" is used for caching the Value "rule identifier set" using the character string "identifier of cluster 1" as a key; the cache area "identifier or rule 1 -set<identifier of sub-rule 1, identifier of sub-rule 2>" is used for caching the Value "sub-rule identifier set" using the character string "identifier of rule 1" as the key; and the cache area "identifier of sub-rule m→set<some rule items>" is used for caching the Value "rule item set" using the character string "identifier of sub-rule m" as the key, where m is a positive integer, m≤M, and M represents that the rule 1 is composed of M sub-rules.
(2) Data is cached using a data structure 2 (e.g., list data structure) in the cache areas corresponding to the rule expression objects (e.g., a certain load type rule item) of the load scaling type represented by the leaf nodes in the rule tree. For example, FIG. 3 shows the identifier of the load type rule item→list< timestamp>. The timestamp is a timestamp corresponding to an indicator item of which an indicator value meets the above indicator determination condition (e.g., exceeding the threshold or less than the threshold), and the insertion logic of List is that insertion is allowed when the indicator value meets the indicator determination condition (e.g., the number of YARN queued tasks is greater than 5).

It needs to be noted that the present disclosure does not limit an implementation of the above "identifier of the load type rule item". For example, the "identifier of the load type rule item" may be metric#period#unit#compare#threshold#times, where metric represents a load indicator item, and period an indicator detection time period, unit a sampling interval, compare a comparison operator (e.g., greater than or less than), threshold a threshold, times a number of occurrences; thus, the "identifier of the load type rule item" is enabled to represent semantic information carried by the load type rule item to facilitate subsequent determination on the obtained indicator value based on the "identifier of the load type rule item". As can be seen, when the load type rule item is the rule item "a number of occurrences that a number of YARN queued tasks is greater than 5 is greater than 2 in 2 hours" shown in FIG. 2, the identifier of the load type rule item may be the character string "AvailableMemory#30#minute#less#50#5" shown in FIG. 3.

It also needs to be noted that the present disclosure also does not limit an implementation of the identifier of the time type rule item. For example, the "identifier of the time type rule item" may be recurrenceType#(recurrenceValue)#(begin#end), where recurrenceType represents a period type (such as daily and weekly), and recurrenceValue is a period value and is an optional content; for example, when the period type is weekly or monthly, the parameter recurrenceValue is not null; however, when the period type is daily, the parameter recurrenceValue may be not null; begin represents a beginning time of an interval and end represents an ending time of the interval, and begin and end are optional contents; for example, when the period type is daily, begin and end may not be null. As can be seen, when the time type rule item is the rule item "daily 9 o'clock to 12 o'clock" shown in FIG. 2, the identifier of the time type rule item may be the character string "Daily#09:00-21:00" shown in FIG. 3.

It still needs to be noted that since data (e.g., the current moment and the time range delimited in the time type rule item) required in the determination process of the rule expression object of the time scaling type (e.g., a certain time type rule item) is easily available, to better save space, there is no need to configure an additional cache area for storing the related data for the rule expression object of the time scaling type represented by the leaf node in the above rule tree.

As can be known based on the above step 11 to step 12, for a cluster, after the elastic scaling rule is created for the cluster, the tree structure may be firstly parsed from the elastic scaling rule. The cache space is then configured for the cluster according to the tree structure. Thus, the cache space corresponding to the cluster is obtained and is allowed to include the cache areas corresponding to the rule expression objects (e.g., the cache area corresponding to the load type rule item) in the elastic scaling rule so that these cache areas can be subsequently utilized to record the elastic scaling rule and the related data thereof (e.g., timestamp) obtained for the elastic scaling rule.

As can be known based on the related contents of the above S1, for a cluster management device, if the cluster management device is utilizing the same polling mechanism to realize elastic scaling decision making for a plurality of clusters, after the elastic scaling rule is created for the target cluster (e.g., a newly created cluster or a cluster just added with the elastic scaling rule), the cache space corresponding to the target cluster may be configured according to the elastic scaling rule such that the cache space can record the elastic scaling rule and the related data thereof (e.g., timestamp) obtained for the elastic scaling rule. As a result, elastic scaling decision making for the target cluster can be realized subsequently by means of the cache space and the polling process. Thus, all the clusters managed by the cluster management device and having an elastic scaling decision-making configuration can be centralized and unified to the same polling mechanism, and the elastic scaling decision-making efficiency can thus be effectively improved.

S2: obtaining indicator detection state data of the load type rule item within a completion time range according to a cluster identifier of the target cluster and an indicator item identifier carried by the load type rule item, and storing the indicator detection state data to the cache space corresponding to the target cluster, wherein the completion time range is determined based on an indicator detection time period carried by the load type rule item and a triggering time of previous polling.

The cluster identifier of the target cluster is used for uniquely identifying the target cluster.

The indicator item identifier is a character string existing in the above load type rule item and used for identifying a load indicator item, and the present disclosure does not limit the indicator item identifier. For example, when the load type rule item is the rule item "a number of occurrences that a number of YARN queued tasks is greater than 5 is greater than 2 in 2 hours" shown in FIG. 2, the indicator item identifier may be the character string "a number of YARN queued tasks".

The indicator detection time period refers to a detection time period existing in the above load type rule item and used for identifying a load indicator item, and the present disclosure does not limit the indicator detection time period. For example, when the load type rule item is the rule item "a number of occurrences that a number of YARN queued tasks is greater than 5 is greater than 2 in 2 hours" shown in FIG. 2, the indicator detection time period may be the character string "in 2 hours".

The triggering time of previous polling refers to a last polling time of a polling process existing in the above cluster management device and used for performing centralized polling processing for clusters having the elastic scaling decision-making configuration. As can be seen, the "triggering time of previous polling" refers to the last triggering moment of the polling process until the time when the above step S2 is performed.

As can be known based on the content of the above paragraph, in a possible implementation, if the cluster management device is configured to perform elastic scaling decision-making processing on at least one cluster to be managed using the same polling mechanism before the elastic scaling rule for the target cluster is created, the above "triggering time of previous polling" may refer to the triggering moment of the previous polling process under the polling mechanism. The cluster to be managed refers to a cluster needing to be managed by the cluster management device by means of the same polling mechanism before the elastic scaling rule is created for the target cluster.

In addition, the present disclosure does not limit a way of obtaining the above "triggering time of previous polling". For example, in some application scenarios, for the polling process for performing polling processing for the cluster having the elastic scaling decision-making configuration, each triggering time of the polling process may be updated and stored to a certain cache space so that the "triggering time of previous polling" can be then rapidly read from the cache space.

The completion time range refers to a historical time period needing to be used in performing polling processing for the elastic scaling decision making of the target cluster so that the target cluster can directly join in the existing polling mechanism by means of the data involved within the completion time range.

In addition, to enable joining in the same polling mechanism on the premise of missing no data, the present disclosure further provide a determination process for the above completion time range, which may specifically include: determining the completion time range based on the indicator detection time period carried by the above load type rule item and the triggering time of previous polling such that the completion time range is specifically [triggering time of previous polling-the indicator detection time period, the triggering time of previous polling]. Thus, the data needing to be used by the target cluster in the previous polling process under the existing polling mechanism can be completed by means of the completion time range so that only the data involved in the polling interval needs to be determined subsequently. The purpose of once completion plus multiple polling updating is achieved, which in turn is conducive to improving the elastic scaling decision-making efficiency.

The above "indicator detection state data of the load type rule item within the completion time range" is used for representing the state presented by the load type rule item within the completion time range, and the present disclosure does not limit an implementation of the "indicator detection state data of the load type rule item within the completion time range". For example, the indicator detection state data may include a collection time point (e.g., timestamp) of an indicator value meeting the indicator determination condition carried by the load type rule item. For ease of understanding, the following description is made in combination with an example.

As an example, when the above load type rule item is the rule item "a number of occurrences that a number of YARN queued tasks is greater than 5 is greater than 2 in 2 hours" shown in FIG. 2 and the triggering time of previous polling is 10:00, the completion time range may be [8:00, 10:00]. Moreover, an obtaining process of the above "indicator detection state data of the load type rule item within the completion time range" may specifically include: obtaining a number of YARN queued tasks according to a preset sampling interval (e.g., 30 seconds) within the time range [8:00, 10:00], and determining whether the number of YARN queued tasks sampled each time is greater than 5, and if the number is greater than 5, storing the timestamp of the number of YARN queued tasks (i.e., the sampling time point of the number of YARN queued tasks) to the cache area corresponding to the load type rule item. Accordingly, the timestamp (e.g., timestamp such as "timestamp-1" and "timestamp-7" shown in FIG. 4) of the number of YARN queued tasks of greater than 5 occurring in the time range [8:00, 10:00] is stored in the cache area so that the "timestamp of the number of YARN queued tasks of greater than 5 occurring in the time range [8:00, 10:00]" can be subsequently determined as the above "indicator detection state data of the load type rule item within the completion time range".

As can be known based on the content of the above paragraph, in a possible implementation, when the above plurality of rule expression objects include the load type rule item and the above cache space corresponding to the target cluster includes the cache areas corresponding to the rule expression objects, the above S2 may specifically include: obtaining the indicator detection state data of the load type rule item within the completion time range according to the cluster identifier of the target cluster and the indicator item identifier carried by the load type rule item, and storing the indicator detection state data to the cache area corresponding to the load type rule item so that whether the load type rule item is met can be determined subsequently based on the recorded content in the cache area corresponding to the load type rule item.

Actually, to better improve the elastic scaling decision-making effect, the completion data corresponding to a cluster may be obtained by means of a pre-constructed interface. On this basis, the present disclosure further provides an obtaining process of the above "indicator detection state data of the load type rule item within the completion time range", which may specifically include: transferring the above cluster identifier of the target cluster, the indicator item identifier carried by the load type rule item, and the completion time range to a data completion interface, and invoking the data completion interface to obtain the indicator detection state data of the load type rule item within the completion time range.

The data completion interface is configured to obtain a list of indicator values meeting a certain condition (e.g., the above condition "the number of YARN queued tasks is greater than 5") and corresponding timestamps thereof within a certain time range according to the cluster identifier and the indicator item, and a return value of the data completion interface may be denoted as List< factValue, timestamp>. The factValue is an indicator value and the timestamp is the timestamp corresponding to the indicator value.

In addition, the data completion interface may be configured in advance according to an application scenario, and the present disclosure does not limit a working principle of the data completion interface. For example, when the above load type rule item is the rule item "a number of occurrences that a number of YARN queued tasks is greater than 5 is greater than 2 in 2 hours" shown in FIG. 2 and the above completion time range may be [8:00, 10:00], the working principle of the data completion interface may be specifically as follows: the number of YARN queued tasks is obtained according to the preset sampling interval (e.g., 30 seconds) within the time range [8:00, 10:00], and whether the number of YARN queued tasks sampled each time is greater than 5 is determined so that the indicator values greater than 5 and the timestamps corresponding to the indicator values can be subsequently utilized to form a list, and the list is returned to the above cluster management device, enabling the cluster management device to utilize the data in the list (e.g., the timestamp such as "timestamp-1" shown in FIG. 2) to update the cache area corresponding to the load type rule item. Thus, the purpose of initializing the storage content in the cache area corresponding to the load type rule item can be achieved.

As can be known based on the related contents of the above S2, for a cluster management device, if the cluster management device is utilizing the same polling mechanism to realize elastic scaling decision-making processing for a plurality of clusters to be managed, after the elastic scaling rule is created for the target cluster, when the elastic scaling rule includes at least the load type rule item, the indicator detection state data (e.g., two timestamps "timestamp-1" and "timestamp-7" shown in FIG. 3) of the load type rule item within the completion time range may be obtained according to the cluster identifier of the target cluster and the indicator item identifier carried by the load type rule item. The indicator detection state data can represent the state (e.g., at which moments the load indicator condition characterized by the load type rule item is met) presented by the load type rule item in the time range [triggering time of previous polling-indicator detection time period, triggering time of previous polling], and the indicator detection state data is stored to the cache area corresponding to the load type rule item. Thus, the purpose of performing polling initialization processing under the polling mechanism for the storage content in the cache area can be achieved so that the storage content can be then continuously updated using the data occurring within the polling interval on the basis of these initialized contents. Thus, it can be ensured that only the data occurring within the polling interval needs to be obtained in each subsequent polling, which in turn is conducive to improving the elastic scaling decision-making efficiency.

It needs to be noted that the present disclosure does not limit a relative relationship between a time when the step "obtaining the indicator detection state data of the load type rule item within the completion time range according to the cluster identifier of the target cluster and the indicator item identifier carried by the load type rule item" in the above S2 is performed and a time when the step "configuring the cache space corresponding to the target cluster according to the elastic scaling rule" in the above S1 is performed. For example, the two steps may be performed simultaneously. For another example, the two steps may be performed in a preset order.

S3: determining whether a polling triggering condition is met; if yes, performing the following S4-S5; and if no, returning to perform the above S3 again.

The polling triggering condition may be preset. For example, the polling triggering condition may be specifically as follows: a difference between a current moment and the triggering time of previous polling reaches a preset polling interval (e.g., 5 minutes).

In addition, the present disclosure does not limit the polling triggering condition. For example, if the cluster management device is configured to perform elastic scaling decision-making processing on at least one cluster to be managed using the same polling mechanism before the elastic scaling rule for the target cluster is created, the polling triggering condition may be a condition set for the polling mechanism in advance and used for triggering a polling process. Any cluster (e.g., the target cluster) can smoothly join in the continuous polling process described by the polling mechanism according to the polling triggering condition.

As can be known based on the related contents of the above S3, for a cluster management device, the cluster management device may determine whether the difference between the current moment and the triggering time of previous polling reaches the polling interval. If the difference is below the polling interval, it may be determined that the polling triggering condition is not met, and the step "determining whether the difference between the current moment and the triggering time of previous polling reaches the polling interval" may be performed again after waiting for a preset duration. If the difference is equal to the polling interval, it may be determined that the polling triggering condition is met. Therefore, a round of elastic scaling decision-making processing (i.e., the processing process shown in the following S4-S5) may be performed for each cluster having the elastic scaling configuration. Thus, the purpose of centralizing the elastic scaling processing of all the clusters under the same polling mechanism can be achieved, which in turn is conducive to improving the elastic scaling decision-making efficiency.

S4: if the polling triggering condition is met, obtaining an indicator detection update result corresponding to the target cluster and updating the storage content in the cache space corresponding to the target cluster according to the indicator detection update result corresponding to the target cluster, wherein the indicator detection update result is used for describing an indicator detection state update presented by the elastic scaling rule during a polling interval.

The indicator detection update result is used for describing the state presented by the elastic scaling rule corresponding to the target cluster between two adjacent rounds of polling (i.e., within one polling interval). As can be seen, when the elastic scaling rule includes the above load type rule item, the indicator detection update result corresponding to the target cluster may include at least the indicator detection state update data (e.g., two timestamps "timestamp-14" and "timestamp-18" shown in FIG. 4) corresponding to the load type rule item, and the indicator detection state update data can represent the state presented by the load type rule item within the polling interval.

In addition, the present disclosure does not limit an obtaining process of the above indicator detection update result.

Actually, to better improve the elastic scaling decision-making effect, the above "indicator detection update result corresponding to the target cluster" may be obtained by means of a preset interface. On this basis, the present disclosure further provides a possible implementation of an obtaining process of the "indicator detection update result corresponding to the target cluster", which may specifically include: invoking a polling data interface to obtain the indicator detection update result corresponding to the target cluster.

The polling data interface is configured to perform centralized data collection processing on all the indicator items involved in all the clusters each having the elastic scaling configuration, and a return value of the polling data interface may be denoted as Map<clusterId, List<metric, factValue, timestamp>>. The return value can represent the indicator value under each indicator item needing to be collected for each cluster and the corresponding timestamp. Map refers to a mapping relationship; clusterId is the cluster identifier; List is the list; metric is the indicator item; factValue is the indicator value; and timestamp is the timestamp corresponding to the indicator value.

In addition, the above polling data interface may be configured in advance according to an application scenario, and the present disclosure does not limit a working principle of the polling data interface. For example, when the above "elastic scaling rule corresponding to the target cluster" is the elastic scaling rule shown in FIG. 2, the triggering time of current polling is 10:05 and the polling interval is 5 minutes, the working principle of the polling data interface may be specifically as follows: the number of YARN queued tasks is obtained according to the preset sampling interval (e.g., 30 seconds) within the time range [10:00, 10:05], and whether the number of YARN queued tasks sampled each time is greater than 5 is determined so that the indicator values greater than 5 and the timestamps corresponding to the indicator values can be subsequently utilized to form a mapping relationship Map, and the mapping relationship is returned to the above cluster management device, enabling the cluster management device to utilize the data in the mapping relationship (e.g., the timestamp such as timestamp-14" and "timestamp-18" shown in FIG. 4) to update the cache area corresponding to the load type rule item. Thus, the purpose of updating the storage content in the cache area corresponding to the load type rule item can be achieved.

Actually, to better improve the efficiency, the present disclosure further provides a possible implementation of the above S4. In the implementation, when the above cluster management device is configured to manage a plurality of clusters and the plurality of clusters include the target cluster, S4 may specifically include: if the polling triggering condition is met, invoking the polling data interface to obtain the indicator detection update results corresponding to the plurality of clusters and updating the storage contents in the cache spaces corresponding to the clusters according to the indicator detection update results corresponding to the clusters. Thus, the purpose of simultaneously obtaining the related data of all the clusters having the elastic scaling configuration by means of one interface can be achieved. It needs to be noted that the obtaining process of the indicator detection update results corresponding to each cluster is similar to the obtaining process of the above "indicator detection update result corresponding to the target cluster", which will not be described redundantly here for brevity.

Actually, to better improve the elastic scaling decision-making effect, the present disclosure further provides a possible implementation of the updating process of the storage content. In the implementation, for the storage content in the cache space corresponding to each cluster, not only does the storage content need to be updated using the indicator values exceeding a threshold within the time period [triggering time of current polling-polling interval, triggering time of current polling], but also whether the timestamp having the longest storage time recorded in the updated storage content has expired needs to be further determined circularly. If the timestamp has expired, the timestamp may be directly deleted. If the timestamp has not expired, the circulation may be directly terminated. Thus, all expired timestamps can be deleted from the cache space by means of circulation, thereby ensuring that only an unexpired storage content is present in the cache space.

It needs to be noted that to avoid data missing, in a possible implementation, the triggering time of current polling-polling interval in the above paragraph may be the triggering time of previous polling, thus ensuring no phenomenon of data missing.

It also needs to be noted that the present disclosure does not limit an implementation of the above step "determining whether the timestamp having the longest storage time recorded in the updated storage content has expired", which, for example, may specifically include: subtracting the indicator detection time period (the time period of 30 minutes characterized by the character string "30#minute" in FIG. 3 and the time period of 2 hours characterized by the character string "2#hour" in FIG. 3) involved in the key within the cache area where the timestamp is located from the current moment to obtain a time starting point (i.e., current moment-indicator detection time period); then determining whether the timestamp is below the time starting point; if yes, determining that the timestamp has expired; and if no, determining that the timestamp has not expired.

As can be known based on the related contents of the above S4, for a cluster management device for managing a plurality of clusters, when it is determined that the polling triggering condition (e.g., current moment = triggering time of previous polling + polling interval) is met, the polling data interface may be firstly invoked to obtain the indicator detection update results corresponding to the plurality of clusters, and the indicator detection update results include the timestamps corresponding to the indicator values exceeding the threshold within the time period [triggering time of current polling-polling interval, triggering time of current polling]. The storage contents in the cache spaces corresponding to the clusters are then updated according to the indicator detection update results corresponding to the clusters such that the updated storage contents are newly added with the timestamps corresponding to the indicator values exceeding the threshold within the time period [triggering time of current polling-polling interval, triggering time of current polling]. Finally, whether the timestamp having the longest storage time recorded in the updated storage content has expired is determined circularly. If the timestamp has expired, the timestamp is directly deleted. If the timestamp has not expired, the circulation is directly terminated. As a result, the finally obtained storage content (e.g., the updated cached content shown in FIG. 4) can accurately record the timestamps corresponding to the indicator values exceeding the threshold within the time range [triggering time of current polling-indicator detection time period, triggering time of current polling] so that the corresponding rule item (e.g., the rule item "a number of occurrences that a number of YARN queued tasks is greater than 5 is greater than 2 in 2 hours" shown in FIG. 2) is met can be then directly determined based on a number of timestamps in the storage content.

S5: determining an elastic scaling decision-making result corresponding to the target cluster according to the storage content in the cache space corresponding to the target cluster, and returning to perform the above S3 again.

The elastic scaling decision-making result corresponding to the target cluster is used for representing whether elastic scaling processing is performed for the target cluster, and the present disclosure does not limit a determination way of the "elastic scaling decision-making result corresponding to the target cluster", which, for example, may specifically include: firstly determining whether the elastic scaling rule corresponding to the target cluster is met according to the storage content in the cache space corresponding to the target cluster; if the elastic scaling rule is met, determining that the elastic scaling processing needs to be performed for the target cluster; and if the elastic scaling rule is not met, determining that the elastic scaling processing does not need to be performed for the target cluster.

In addition, the present disclosure does not limit an implementation of the above step "determining whether the elastic scaling rule corresponding to the target cluster is met according to the storage content in the cache space corresponding to the target cluster". For example, when the elastic scaling rule corresponding to the target cluster includes the load type rule item, the above step may specifically include the following step 21 to step 22.

Step 21: determining whether the load type rule item is met according to the storage content in the cache area corresponding to the load type rule item to obtain a determination result of the load type rule item, so that the determination result can show whether the target cluster meets the load type rule item.

In the present disclosure, for the current polling process, when the elastic scaling rule corresponding to the target cluster includes the load type rule item (e.g., the rule item "a number of occurrences that a number of YARN queued tasks is greater than 5 is greater than 2 in 2 hours" shown in FIG. 2), a number of timestamps stored in the cache area corresponding to the load type rule item is firstly counted. Whether the number exceeds an occurrence threshold (e.g., 2) involved in the load type rule item is then determined; if yes, it may be determined that the target cluster meets the load type rule item; and if no, it may be determined that the target cluster does not meet the load type rule item.

As can be seen, for any load type rule item, whether the load type rule item is met is determined by determining whether the number (e.g., the size of List) of timestamps in the cache area corresponding to the load type rule item exceeds a number threshold involved in the load type rule item.

Step 22: determining the above determination result of the elastic scaling rule corresponding to the target cluster according to the determination result of the load type rule item, so that the determination result can show whether the target cluster meets the elastic scaling rule.

It needs to be noted that the present disclosure does not limit an implementation of step 22.

As can be known based on the related contents of the above step 21 to step 22, in some application scenarios (e.g., a scenario such as the load scaling type), for the elastic scaling rule corresponding to a cluster, whether the load type rule items in the elastic scaling rule are met is determined firstly based on the storage content in the cache space corresponding to the elastic scaling rule; and then the determination result of the elastic scaling rule is comprehensively determined based on the determination results of these load type rule items, where the determination result can represent whether the target cluster meets the elastic scaling rule.

Actually, in some application scenarios (e.g., a hybrid scenario of time scaling plus load scaling), the above elastic scaling rule corresponding to the target cluster not only involves the load type rule item, but also may involve the time type rule item. Therefore, to better improve the decision-making effect, the present disclosure further provides a possible implementation of the determination process of the above "elastic scaling decision-making result corresponding to the target cluster". In the implementation, when the above "elastic scaling decision-making result corresponding to the target cluster" further includes the time type rule item (e.g., the rule item "daily 9 o'clock to 12 o'clock" shown in FIG. 2), the determination process of the "elastic scaling decision-making result corresponding to the target cluster" may specifically include the following step 31 to step 32.

Step 31: determining whether the triggering time of current polling is within a time range characterized by the above time type rule item to obtain a determination result of the time type rule item.

The above "time range characterized by the time type rule item" refers to a time range designated by the time type rule item. For example, when the time type rule item is the rule item "daily 9 o'clock to 12 o'clock" shown in FIG. 2, the "time range characterized by the time type rule item" may be the time range [09:00, 12:00].

The above "determination result of the time type rule item" is used for representing whether the target cluster meets the time type rule item.

As can be known based on the related content of the above step 31, for the current polling process, when the elastic scaling rule corresponding to the target cluster includes the time type rule item (e.g., the rule item "daily 9 o'clock to 12 o'clock" shown in FIG. 2), it may be determined that the time range characterized by the time type rule item is the time range [09:00, 12:00]. Therefore, whether the triggering time of current polling is within the time range [09:00, 12:00] may be determined; if yes, it may be determined that the time type rule item is met; and if no, it may be determined that the time type rule item is not met.

Step 32: determining the elastic scaling decision-making result corresponding to the target cluster according to the above determination result of the time type rule item and the above storage content in the cache space corresponding to the target cluster.

It needs to be noted that the present disclosure does not limit an implementation of step 32.

As can be known based on the related contents of the above step 31 to step 32, for the current polling process, if the elastic scaling rule corresponding to the target cluster includes the load type rule item and the time type rule item, the determination result of the time type rule item and the determination result of the load type rule item may be firstly obtained. The determination result of the elastic scaling rule may be then comprehensively determined based on these determination results. Finally, the elastic scaling decision-making result corresponding to the target cluster is determined according to the determination result of the elastic scaling rule.

Actually, the above cluster management device may complete the elastic scaling decision-making processing of all clusters by means of the same polling mechanism. As can be known based on this, the present disclosure further provides a possible implementation of the above S5, which, for example, may specifically include: determining the elastic scaling decision-making results corresponding to the clusters according to the storage contents in the cache spaces corresponding to the clusters. It needs to be noted that the determination process of the elastic scaling decision-making result corresponding to each cluster is similar to the determination process of the above "elastic scaling decision-making result corresponding to the target cluster", which will not be described redundantly here for brevity.

As can be known based on the related contents of the above S1 to S5, for the data processing method applied to the cluster management device provided in the embodiments of the present disclosure, after the elastic scaling rule is created for the target cluster, firstly, the cache space corresponding to the target cluster is configured according to the elastic scaling rule. Secondly, the indicator detection state data of the load type rule item within the completion time range is obtained according to the cluster identifier of the target cluster and the indicator item identifier carried by the load type rule item in the elastic scaling rule, and the indicator detection state data is stored to the cache space corresponding to the target cluster such that a state (e.g., at which moments the load indicator condition characterized by the load type rule item is met) presented by the load type rule item within a time range [triggering time of previous polling-indicator detection time period, triggering time of previous polling] is recorded in the cache space. Subsequently, the indicator detection update result corresponding to the target cluster is continuously obtained by polling such that the indicator detection update result is used for describing the indicator detection state update presented by the elastic scaling rule during the polling interval, and the storage content in the cache space corresponding to the target cluster is updated according to the indicator detection update result such that the content recorded for the indicator detection time period in the storage space is continuously updated. Thus, the instantaneity of the storage content in the cache space can be ensured so that the elastic scaling decision-making result corresponding to the target cluster can be determined in real time according to the storage content in the cache space. Thus, by means of once completion plus continuous polling updating, the purpose of elastic scaling decision making for a cluster can be achieved.

Since the completion time range is determined based on the indicator detection time period carried by the load type rule item and the triggering time of previous polling such that an end moment involved in the completion time range is a start moment of current polling, an adverse effect caused by a rule creation moment not belong to a triggering timing of certain polling (e.g., a resource overhead caused by that the existing cluster polling process in the cluster management device cannot be used) can be effectively overcome. Thus, the purpose of successfully joining in the polling process on the premise of missing no data can be achieved, which in turn is conducive to improving the elastic scaling decision-making effect of the cluster management device for a cluster.

In addition, for a cluster, since a data completion process is performed when a rule is created for the cluster such that the indicator detection state data in the time range [triggering time of previous polling-indicator detection time period, triggering time of previous polling] is stored in the cache space corresponding to the cluster, storage updating may be carried out in a subsequent continuous polling process merely by obtaining the indicator detection state update presented during the polling interval. Thus, the elastic scaling decision-making efficiency for a cluster can be effectively improved.

Moreover, for the above cluster management device, the cluster management device can obtain the indicator detection state updates presented by all clusters during the polling interval merely by means of an interface (e.g., the polling data interface) in each polling process. Thus, the purpose of completing the elastic scaling decision-making process for all the clusters using the same polling mechanism can be achieved. As a result, an adverse effect caused by configuring a polling process for each cluster can be effectively avoided, which in turn is conducive to improving the elastic scaling decision-making effect of the cluster management device for the cluster.

Actually, to better improve the decision-making effect, the present disclosure further provides another possible implementation of the above data processing method, which may specifically include the following step 41 to step 47.

Step 41: after an elastic scaling rule is created for a target cluster, configuring a cache space corresponding to the target cluster according to the elastic scaling rule, wherein the elastic scaling rule includes a load type rule item.

It needs to be noted that for the related content of step 41, please see the related content of the above S1.

Step 42: reading a previous invoking time of a polling data interface from a preset cache area as a triggering time of previous polling, and determining a completion time range based on the indicator detection time period carried by the above load type rule item and the triggering time of previous polling.

The preset cache area refers to a preset cache space for caching the invoking time of the above polling data interface, and the present disclosure does not limit an implementation of the preset cache area, which, for example, may be implemented using redis.

The above "previous invoking time of the polling data interface" refers to an occurrence moment of invoking the polling data interface in the last polling process existing in the above cluster management device and used for performing centralized polling processing for clusters having the elastic scaling decision-making configuration.

For the related content of the above "completion time range", please see the above contents.

It needs to be noted that the present disclosure does not limit when step 42 is performed. For example, the time when step 42 is performed is later than a creation time of the above elastic scaling rule corresponding to the target cluster.

Step 43: the above cluster identifier of the target cluster, the indicator item identifier carried by the load type rule item, and the completion time range are transferred to a data completion interface, and the data completion interface is invoked to obtain the indicator detection state data of the load type rule item within the completion time range.

It needs to be noted that for the related content of step 43, please see the above.

Step 44: determining whether a polling triggering condition is met; if yes, performing the following step 45 to step 47; and if no, returning to perform the above step 44 again.

It needs to be noted that for the related content of step 44, please see the related content of the above step S3.

Step 45: if the polling triggering condition is met, invoking the polling data interface to obtain an indicator detection update result corresponding to the target cluster and updating the storage content in the cache space corresponding to the target cluster according to the indicator detection update result corresponding to the target cluster, wherein the indicator detection update result is used for describing an indicator detection state update presented by the elastic scaling rule during a polling interval.

It needs to be noted that for the related content of step 45, please see the above descriptions.

Step 46: updating data stored in the above preset cache area using the above current invoking time of the polling data interface.

The current invoking time of the polling data interface refers to an occurrence moment of invoking the polling data interface in the current polling process.

As can be known based on the related content of the above step 46, for the current polling process, the occurrence moment of invoking the polling data interface in the current polling process may be obtained firstly, and the occurrence moment is recorded to the preset cache area such that the moment recorded in the preset cache area can be used as a starting moment of a data collection process involved in next polling process. Thus, the purpose of recording each polling triggering time by means of the preset cache area can be achieved. Accordingly, when a new cluster needs to join in the polling process, data completion processing may be performed once by directly utilizing the moment recorded in the preset cache area.

It needs to noted that the present disclosure does not limit a time when step 46 is performed. For example, the time when step 46 is performed is later than a time when the above step "invoking the polling data interface" is performed.

Step 47: determining an elastic scaling decision-making result corresponding to the target cluster according to the storage content in the cache space corresponding to the target cluster, and returning to perform the above S3 again.

It needs to be noted that for the related content of step 47, please see the related content of the above S5.

As can be known based on the related contents of the above step 41 to step 47, in some application scenarios, for a cluster management device, not only does the data involved in all the clusters having the elastic scaling configuration need to be stored to the cache spaces, but also the polling triggering times involved in performing centralized polling processing for these clusters need to be recorded to the cache spaces in real time, thus being conducive to improving the decision-making effect.

Actually, to better enhance the user experience, the present disclosure further provides some possible implementations for the creation process of the above "elastic scaling rule", which will be illustrated below by means of the contents shown in (1) to (3).

(1) In the present disclosure, a user may configure the elastic scaling rule based on a natural language. Rule contents and an associated logic are clearly shown in an expressive configuration manner on a user interactive interface. Thus, the configuration threshold of the elastic scaling rule can be effectively reduced so that the user can complete rule configuration easily and rapidly.

(2) In the present disclosure, the elastic scaling rule may be obtained by combining the time scaling type or the load scaling type. Thus, a negative effect caused by being purely based on load or time adjustment resources can be effectively eliminated; the determination error caused by the user's estimation based on experience is reduced; the safety and effectiveness of resource control are improved; and the scaling effect can more accurately meet expectation.

(3) In the present disclosure, the user may separately set the elastic scaling rule and the elastic scaling strategy of each cluster so that the user can adjust the elastic scaling strategies by binding or unbinding some elastic scaling rules to or from some elastic scaling strategies. Thus, for some elastic scaling strategies having a certain common requirement, only one elastic scaling rule meeting the requirement needs to be configured. Accordingly, not only can the configuration cost of the elastic scaling rule be effectively saved, but also the reuse ratio of the elastic scaling rule can be effectively increased, which in turn is conducive to enhancing the user experience.

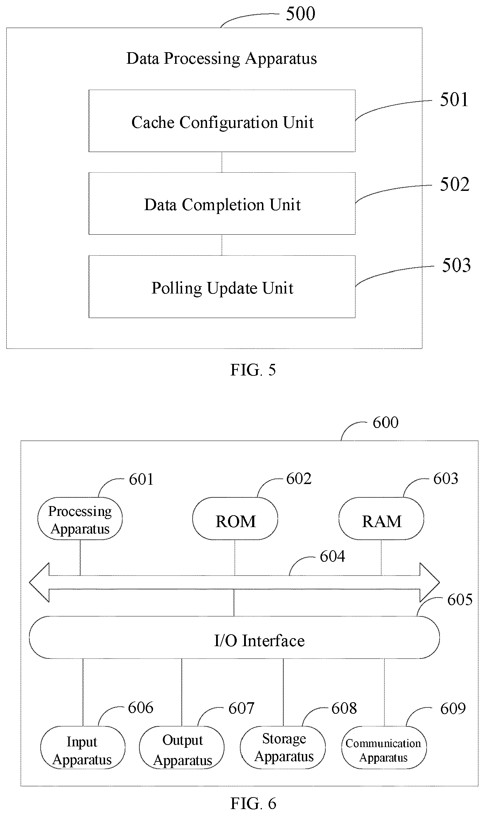

Based on the data processing method provided in the embodiments of the present disclosure, an embodiment of the present disclosure further provides a data processing apparatus. The video processing apparatus will be explained and described below with reference to FIG. 5. FIG. 5 is a structural schematic diagram of a data processing apparatus provided in an embodiment of the present disclosure. It needs to be noted that for the technical details of the data processing apparatus provided in the embodiment of the present disclosure, please see the related contents of the above data processing method.

As shown in FIG. 5, the data processing apparatus 500 provided in the embodiment of the present disclosure includes: a cache configuration unit 501 configured to: after creating an elastic scaling rule for a target cluster, configure a cache space corresponding to the target cluster according to the elastic scaling rule, where the elastic scaling rule includes a load type rule item; a data completion unit 502 configured to: obtain indicator detection state data of the load type rule item within a completion time range according to a cluster identifier of the target cluster and an indicator item identifier carried by the load type rule item, and store the indicator detection state data to the cache space corresponding to the target cluster, where the completion time range is determined based on an indicator detection time period carried by the load type rule item and a triggering time of previous polling; and a polling update unit 503 configured to: determine whether a polling triggering condition is met, and if yes, obtain an indicator detection update result corresponding to the target cluster and update a storage content in the cache space corresponding to the target cluster according to the indicator detection update result corresponding to the target cluster, where the indicator detection update result is used for describing an indicator detection state update presented by the elastic scaling rule during a polling interval; and determine an elastic scaling decision-making result corresponding to the target cluster according to the storage content in the cache space corresponding to the target cluster, and continue to perform the step of determining whether the polling triggering condition is met.

In a possible implementation, before the elastic scaling rule for the target cluster is created, the cluster management device is configured to perform elastic scaling decision-making processing on at least one cluster to be managed using a same polling mechanism. The triggering time of previous polling refers to a triggering moment of a previous polling process under the polling mechanism. The polling triggering condition refers to a condition set for the polling mechanism in advance and used for triggering a polling process.

In a possible implementation, the data completion unit 502 is specifically configured to: transfer the cluster identifier of the target cluster, the indicator item identifier carried by the load type rule item, and the completion time range to a data completion interface, and invoke the data completion interface to obtain the indicator detection state data of the load type rule item within the completion time range.

The polling update unit 503 is specifically configured to: invoke a polling data interface to obtain the indicator detection update result corresponding to the target cluster.

In a possible implementation, the cluster management device is configured to manage a plurality of clusters; and the plurality of clusters include the target cluster.

The polling update unit 503 is specifically configured to: invoke the polling data interface to obtain indicator detection update results corresponding to the plurality of clusters; update the storage content in cache spaces corresponding to the clusters according to the indicator detection update results corresponding to the clusters; and determine elastic scaling decision-making results corresponding to the clusters according to the storage contents in the cache spaces corresponding to the clusters.

In a possible implementation, the data processing apparatus 500 further includes: a data reading unit configured to: before transferring the cluster identifier of the target cluster, the indicator item identifier carried by the load type rule item, and the completion time range to the data completion interface, read a previous invoking time of the polling data interface from a preset cache area as the triggering time of previous polling; and a time determination unit configured to: determine the completion time range based on the indicator detection time period carried by the load type rule item and the triggering time of previous polling.

In a possible implementation, the polling update unit 503 is further configured to: update data stored in the preset cache area using a current invoking time of the polling data interface.

In a possible implementation, the cache configuration unit 501 is specifically configured to: parse the elastic scaling rule to obtain a rule tree, where the elastic scaling rule includes a plurality of rule expression objects; the plurality of rule expression objects include the load type rule item; and the rule tree includes nodes corresponding to the rule expression objects; and configure the cache space corresponding to the target cluster according to the rule tree, where the cache space includes cache areas corresponding to the rule expression objects.

In a possible implementation, the cache space corresponding to the target cluster includes a cache area corresponding to the load type rule item.

The data completion unit 502 is specifically configured to: store the indicator detection state data to the cache area corresponding to the load type rule item.

In a possible implementation, the elastic scaling rule further includes a time type rule item.

The polling update unit 503 is specifically configured to: determine whether a triggering time of current polling is within a time range characterized by the time type rule item to obtain a determination result; and determine the elastic scaling decision-making result corresponding to the target cluster according to the determination result and the storage content in the cache space corresponding to the target cluster.

As can be known based on the related contents of the data processing apparatus 500, for the data processing apparatus 500 provided in the present disclosure, for a cluster management device, after the elastic scaling rule is created for the target cluster, firstly, the cache space corresponding to the target cluster is configured according to the elastic scaling rule. Secondly, the indicator detection state data of the load type rule item within the completion time range is obtained according to the cluster identifier of the target cluster and the indicator item identifier carried by the load type rule item in the elastic scaling rule, and the indicator detection state data is stored to the cache space corresponding to the target cluster such that a state (e.g., at which moments the load indicator condition involved in the load type rule item is met) presented by the load type rule item within a time range [triggering time of previous polling-indicator detection time period, triggering time of previous polling] is recorded in the cache space. Subsequently, the indicator detection update result corresponding to the target cluster is continuously obtained by polling such that the indicator detection update result is used for describing the indicator detection state update presented by the elastic scaling rule during the polling interval, and the storage content in the cache space corresponding to the target cluster is updated according to the indicator detection update result such that the content recorded for the indicator detection time period in the storage space is continuously updated. Thus, the instantaneity of the storage content in the cache space can be ensured so that the elastic scaling decision-making result corresponding to the target cluster can be determined in real time according to the storage content in the cache space. Thus, by means of once completion plus continuous polling updating, the purpose of elastic scaling decision making for a cluster can be achieved.

In addition, embodiments of the present disclosure further provide an electronic device comprising a processor and a memory. The memory is configured to store instructions or a computer program; and the processor is configured to execute the instructions or the computer program in the memory to cause the electronic device to perform the data processing method provided by any one embodiment of the present disclosure.

Fig. 6 is specifically referred below, and it shows the structure schematic diagram suitable for achieving the electronic device 600 in the embodiment of the present disclosure. The electronic device 600 in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 6 is only an example and should not impose any limitations on the functions and use scopes of the embodiments of the present disclosure.

As shown in Fig. 6, the electronic device 600 may include a processing apparatus (such as a central processing unit, and a graphics processor) 601, it may execute various appropriate actions and processes according to a program stored in a read-only memory (ROM) 602 or a program loaded from a storage apparatus 608 to a random access memory (RAM) 603. In RAM 603, various programs and data required for operations of the electronic device 600 are also stored. The processing apparatus 601, ROM 602, and RAM 603 are connected to each other by a bus 604. An input/output (I/O) interface 605 is also connected to the bus 604.

Typically, the following apparatuses may be connected to the I/O interface 605: an input apparatus 606 such as a touch screen, a touchpad, a keyboard, a mouse, a camera, a microphone, an accelerometer, and a gyroscope; an output apparatus 607 such as a liquid crystal display (LCD), a loudspeaker, and a vibrator; a storage apparatus 608 such as a magnetic tape, and a hard disk drive; and a communication apparatus 609. The communication apparatus 609 may allow the electronic device 600 to wireless-communicate or wire-communicate with other devices so as to exchange data. Although Fig. 6 shows the electronic device 600 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 609, or installed from the storage apparatus 608, or installed from ROM 602. When the computer program is executed by the processing apparatus 601, the above functions defined in the data processing method in the embodiments of the present disclosure are executed.

The electronic device and the data processing method provided by the embodiments of the present disclosure are based on the same inventive concept. Technical details that are not disclosed in detail in this embodiment can be referred to the above embodiments, and this embodiment has the same beneficial effects as the above-mentioned embodiments.

Embodiments of the present disclosure further provide a computer readable medium in which instructions or a computer program are/is stored, wherein the instructions or the computer program, when run on a device, cause(s) the device to perform the data processing method provided by any one embodiment of the present disclosure.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to perform the above-mentioned data processing method.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

It should be noted that, the embodiments are described herein in a progressive manner. Each embodiment focuses on the difference from another embodiment, and the same and similar parts between the embodiments may refer to each other. Since the system or apparatus disclosed in an embodiment corresponds to the method disclosed in another embodiment, the description is relatively simple, and a reference can be made to the method description.

It will be appreciated that in the present disclosure, the phrase "at least one" refers to one or more, and the phrase "a plurality of" refers to two or more. The term "and/or" is used for describing an association relationship of associated objects, and represents that three relationships may exist. For example, A and/or B may represent that: A exists alone, B exists alone, and A and B exist at the same time, where A and B may be singular or plural. The character "/" usually represents an "or" relationship between associated objects. The phrase "at least one of the following items" or a similar expression thereof refers to any combination of these items, including a single item or any combination of plural items. For example, "at least one of a, b, or c" may represent: a, b, c, "a and b", "a and c", "b and c", or "a and b and c", where a, b, and c may each be a single or plural item.

It also needs to be noted that as used herein, relational terms such as first and second are merely used to distinguish one entity or operation from another entity or operation without necessarily requiring or implying any actual such relationship or order between such entities or operations. In addition, terms "include", "comprise", or any other variations thereof are intended to cover a non-exclusive inclusion, so that a process, a method, an article, or a device including a series of elements not only includes those elements, but also includes other elements that are not explicitly listed, or also includes inherent elements of the process, the method, the article, or the device. Without more restrictions, the elements defined by the sentence "including a ..." do not exclude the existence of other identical elements in the process, method, article, or device including the elements.

The steps of the method or algorithm described in combination with the embodiments disclosed herein may be directly implemented by hardware, software modules executed by a processor, or a combination of both. The software modules may be placed in a random access memory (RAM), a memory, a read-only memory (ROM), an electrically programmable ROM, an electrically erasable programmable ROM, a register, a hard disk, a removable disk, a compact disc read-only memory (CD-ROM), or a storage medium in any other form well known in the art.

## Claims

1. A data processing method, applied to a cluster management device and **characterized in** comprising:
after an elastic scaling rule for a target cluster is created, configuring (S1) a cache space corresponding to the target cluster according to the elastic scaling rule, wherein the elastic scaling rule comprises a load type rule item;
obtaining (S2) indicator detection state data of the load type rule item within a completion time range according to a cluster identifier of the target cluster and an indicator item identifier carried by the load type rule item, and storing the indicator detection state data to the cache space corresponding to the target cluster, wherein the completion time range is determined based on an indicator detection time period carried by the load type rule item and a triggering time of previous polling and the completion time range is from a time obtained by subtracting the indicator detection time period from the triggering time of previous polling- to the triggering time of previous polling;
after obtaining (S2) indicator detection state data of the load type rule item within a completion time range according to a cluster identifier of the target cluster and an indicator item identifier carried by the load type rule item, and storing the indicator detection state data to the cache space corresponding to the target cluster, determining (S3) whether a polling triggering condition is met, and if yes (S4), obtaining an indicator detection update result corresponding to the target cluster and updating a storage content in the cache space corresponding to the target cluster according to the indicator detection update result corresponding to the target cluster, wherein the indicator detection update result is used for describing an indicator detection state update presented by the elastic scaling rule during a polling interval; and
determining (S5) an elastic scaling decision-making result corresponding to the target cluster according to the storage content in the cache space corresponding to the target cluster, and after determining the elastic scaling decision-making result corresponding to the target cluster, continuing to perform the step of determining (S3) whether the polling triggering condition is met,
wherein the cluster management device is configured to manage a plurality of clusters, the plurality of clusters comprise the target cluster, and the obtaining, in step (S4), the indicator detection update result corresponding to the target cluster comprises invoking a polling data interface to obtain indicator detection update results corresponding to the plurality of clusters, the polling data interface returning a mapping data structure mapping cluster identifiers to lists of tuples, each tuple comprising an indicator item identifier, a corresponding indicator value and a timestamp;
wherein the cache space corresponding to the target cluster comprises a cache area corresponding to the load type rule item, and the cache area corresponding to the load type rule item is implemented as a list data structure storing timestamps of indicator values that meet an indicator determination condition carried by the load type rule item;
wherein the updating, in step (S4), the storage content in the cache space corresponding to the target cluster according to the indicator detection update result comprises inserting, into the list data structure, timestamps of indicator values that meet the indicator determination condition during the polling interval and repeatedly determining whether the oldest timestamp stored in the list data structure is older than [a current moment - the indicator detection time period], and deleting the oldest timestamp while it is older, until the oldest remaining timestamp is not older than [the current moment - the indicator detection time period]; and
wherein determining, in step (S5), the elastic scaling decision-making result corresponding to the target cluster comprises determining whether the load type rule item is met by counting timestamps stored in the list data structure of the cache area corresponding to the load type rule item and determining that the load type rule item is met when the number of timestamps is greater than an occurrence threshold carried by the load type rule item;
before the elastic scaling rule for the target cluster is created, the cluster management device is configured to perform elastic scaling decision-making processing on at least one cluster to be managed using a same polling mechanism;
the triggering time of previous polling refers to a triggering moment of a previous polling process under the polling mechanism; and
the polling triggering condition refers to a condition set for the polling mechanism in advance and used for triggering a polling process,
wherein the method further comprises reading, from a preset cache area, a previous invoking time of the polling data interface and using it as said triggering time of previous polling, and storing, after invoking the polling data interface, a current invoking time in the preset cache area as the triggering time of previous polling for a subsequent polling process.

2. The data processing method according to claim 1, wherein the obtaining indicator detection state data of the load type rule item within a completion time range according to a cluster identifier of the target cluster and an indicator item identifier carried by the load type rule item comprises:
transferring the cluster identifier of the target cluster, the indicator item identifier carried by the load type rule item, and the completion time range to a data completion interface, and invoking the data completion interface to obtain the indicator detection state data of the load type rule item within the completion time range;
and
the obtaining an indicator detection update result corresponding to the target cluster comprises:
invoking the polling data interface to obtain the indicator detection update result corresponding to the target cluster.

3. The data processing method according to claim 2, wherein
the invoking the polling data interface to obtain the indicator detection update result corresponding to the target cluster comprises:
invoking the polling data interface to obtain indicator detection update results corresponding to the plurality of clusters;
the updating a storage content in the cache space corresponding to the target cluster according to the indicator detection update result corresponding to the target cluster comprises:
updating storage contents in cache spaces corresponding to the clusters according to the indicator detection update results corresponding to the clusters;
and
the determining an elastic scaling decision-making result corresponding to the target cluster according to the storage content in the cache space corresponding to the target cluster comprises:
determining elastic scaling decision-making results corresponding to the clusters according to the storage contents in the cache spaces corresponding to the clusters.

4. The data processing method according to claim 2 or claim 3, before the transferring the cluster identifier of the target cluster, the indicator item identifier carried by the load type rule item, and the completion time range to a data completion interface, further comprising:
determining the completion time range based on the indicator detection time period carried by the load type rule item and the triggering time of previous polling.

5. The data processing method according to any one of claims 2 to 4, further comprising:
updating data stored in the preset cache area using the current invoking time of the polling data interface.

6. The data processing method according to any one of claims 1 to 5, wherein the configuring a cache space corresponding to the target cluster according to the elastic scaling rule created for the target cluster comprises:
parsing the elastic scaling rule to obtain a rule tree, wherein the elastic scaling rule comprises a plurality of rule expression objects; the plurality of rule expression objects comprise the load type rule item; and the rule tree comprises nodes corresponding to the plurality of rule expression objects; and
configuring the cache space corresponding to the target cluster according to the rule tree, wherein the cache space comprises cache areas corresponding to the plurality of rule expression objects.

7. The data processing method according to any one of claims 1 to 6,
the storing the indicator detection state data to the cache space corresponding to the target cluster comprises:
storing the indicator detection state data to the cache area corresponding to the load type rule item.

8. The data processing method according to any one of claims 1 to 7, wherein the elastic scaling rule further comprises a time type rule item;
the data processing method further comprises:
determining whether a triggering time of current polling is within a time range **characterized by** the time type rule item to obtain a determination result;
and
the determining an elastic scaling decision-making result corresponding to the target cluster according to the storage content in the cache space corresponding to the target cluster comprises:
determining the elastic scaling decision-making result corresponding to the target cluster according to the determination result and the storage content in the cache space corresponding to the target cluster.

9. A data processing apparatus (500), applied to a cluster management device and **characterized in** comprising:
a cache configuration unit (501) configured to: after an elastic scaling rule for a target cluster is created, configure (S1) a cache space corresponding to the target cluster according to the elastic scaling rule, wherein the elastic scaling rule comprises a load type rule item;
a data completion unit (502) configured to: obtain (S2) indicator detection state data of the load type rule item within a completion time range according to a cluster identifier of the target cluster and an indicator item identifier carried by the load type rule item, and store the indicator detection state data to the cache space corresponding to the target cluster, wherein the completion time range is determined based on an indicator detection time period carried by the load type rule item and a triggering time of previous polling and the completion time range is from a time obtained by subtracting the indicator detection time period from the triggering time of previous polling- to the triggering time of previous polling; and
a polling update unit (503) configured to: after obtaining indicator detection state data of the load type rule item within a completion time range according to a cluster identifier of the target cluster and an indicator item identifier carried by the load type rule item, and storing the indicator detection state data to the cache space corresponding to the target cluster, determine (S3) whether a polling triggering condition is met, and if yes (S4), obtain an indicator detection update result corresponding to the target cluster and update a storage content in the cache space corresponding to the target cluster according to the indicator detection update result corresponding to the target cluster, wherein the indicator detection update result is used for describing an indicator detection state update presented by the elastic scaling rule during a polling interval; and determine (S5) an elastic scaling decision-making result corresponding to the target cluster according to the storage content in the cache space corresponding to the target cluster, and after determining the elastic scaling decision-making result corresponding to the target cluster, continue to perform the step of determining whether the polling triggering condition is met,
wherein the cluster management device is configured to manage a plurality of clusters, the plurality of clusters comprise the target cluster, and obtaining, in step (S4), the indicator detection update result corresponding to the target cluster comprises invoking a polling data interface to obtain indicator detection update results corresponding to the plurality of clusters, the polling data interface returning a mapping data structure mapping cluster identifiers to lists of tuples, each tuple comprising an indicator item identifier, a corresponding indicator value and a timestamp;
wherein the cache space corresponding to the target cluster comprises a cache area corresponding to the load type rule item, and the cache area corresponding to the load type rule item is implemented as a list data structure storing timestamps of indicator values that meet an indicator determination condition carried by the load type rule item;
wherein updating, in step (S4), the storage content in the cache space corresponding to the target cluster according to the indicator detection update result comprises inserting, into the list data structure, timestamps of indicator values that meet the indicator determination condition during the polling interval and repeatedly determining whether the oldest timestamp stored in the list data structure is older than [a current moment - the indicator detection time period], and deleting the oldest timestamp while it is older, until the oldest remaining timestamp is not older than [the current moment - the indicator detection time period]; and
wherein determining, in step (S5), the elastic scaling decision-making result corresponding to the target cluster comprises determining whether the load type rule item is met by counting timestamps stored in the list data structure of the cache area corresponding to the load type rule item and determining that the load type rule item is met when the number of timestamps is greater than an occurrence threshold carried by the load type rule item;
before the elastic scaling rule for the target cluster is created, the cluster management device is configured to perform elastic scaling decision-making processing on at least one cluster to be managed using a same polling mechanism;
the triggering time of previous polling refers to a triggering moment of a previous polling process under the polling mechanism; and
the polling triggering condition refers to a condition set for the polling mechanism in advance and used for triggering a polling process,
wherein the data completion unit is further configured to read, from a preset cache area, a previous invoking time of the polling data interface and use it as said triggering time of previous polling, and store, after invoking the polling data interface, a current invoking time in the preset cache area as the triggering time of previous polling for a subsequent polling process.

10. An electronic device, comprising a processor and a memory,
wherein the memory is configured to store instructions or a computer program; and
the processor is configured to execute the instructions or the computer program in the memory to cause the electronic device to perform the data processing method according to any one of claims 1 to 8.

11. A computer readable medium in which instructions or a computer program are/is stored, wherein the instructions or the computer program, when run on a device, cause(s) the device to perform the data processing method according to any one of claims 1 to 8.

## Patentansprüche

1. Datenverarbeitungsverfahren, das auf eine Cluster-Verwaltungsvorrichtung angewendet wird und **dadurch gekennzeichnet ist, dass** es Folgendes umfasst:
nachdem eine elastische Skalierungsregel für einen Ziel-Cluster erstellt wurde, Konfigurieren (S1) eines Zwischenspeicherraums, der dem Ziel-Cluster entspricht, gemäß der elastischen Skalierungsregel, wobei die elastische Skalierungsregel ein Lasttyp-Regelelement umfasst;
Erhalten (S2) von Indikatorerfassungsstatusdaten des Lasttyp-Regelelements innerhalb einer Abschlusszeitspanne gemäß einer Cluster-Kennung des Ziel-Clusters und einer Indikatorelementkennung, die vom Lasttyp-Regelelement getragen wird, und Speichern der Indikatorerfassungsstatusdaten im Zwischenspeicherraum, der dem Ziel-Cluster entspricht, wobei die Abschlusszeitspanne basierend auf einer vom Lasttyp-Regelelement getragenen Indikatorerfassungszeitperiode und einer Auslösezeit einer vorherigen Abfrage bestimmt wird und die Abschlusszeitspanne von einer Zeit, die durch Subtrahieren der Indikatorerfassungszeitperiode von der Auslösezeit der vorherigen Abfrage erhalten wird, bis zur Auslösezeit der vorherigen Abfrage geht;
nach Erhalten (S2) von Indikatorerfassungsstatusdaten des Lasttyp-Regelelements innerhalb einer Abschlusszeitspanne gemäß einer Cluster-Kennung des Ziel-Clusters und einer vom Lasttyp-Regelelement getragenen Indikatorelementkennung und Speichern der Indikatorerfassungsstatusdaten im Zwischenspeicherraum, der dem Ziel-Cluster entspricht, Bestimmen (S3), ob eine Abfrageauslösebedingung erfüllt ist, und falls ja (S4), Erhalten eines Indikatorerfassungsaktualisierungsergebnisses, das dem Ziel-Cluster entspricht, und Aktualisieren eines Speicherinhalts im Zwischenspeicherraum, der dem Ziel-Cluster entspricht, gemäß dem Indikatorerfassungsaktualisierungsergebnis, das dem Ziel-Cluster entspricht, wobei das Indikatorerfassungsstatusaktualisierungsergebnis zum Beschreiben einer Indikatorerfassungsstatusaktualisierung verwendet wird, die von der elastischen Skalierungsregel während eines Abfrageintervalls dargestellt wird; und
Bestimmen (S5) eines elastischen Skalierungsentscheidungsfindungsergebnisses, das dem Ziel-Cluster entspricht, gemäß dem Speicherinhalt im Zwischenspeicherraum, der dem Ziel-Cluster entspricht, und nach Bestimmen des elastischen Skalierungsentscheidungsfindungsergebnisses, das dem Ziel-Cluster entspricht, Fortsetzen, den Schritt vom Bestimmen (S3), ob die Abfrageauslösebedingung erfüllt ist, durchzuführen,
wobei die Cluster-Verwaltungsvorrichtung so konfiguriert ist, dass sie eine Vielzahl von Clustern verwaltet, die Vielzahl von Clustern den Ziel-Cluster umfassen und das Erhalten, in Schritt (S4), des Indikatorerfassungsaktualisierungsergebnisses, das dem Ziel-Cluster entspricht, Aufrufen einer Abfragedatenschnittstelle umfasst, um Indikatorerfassungsaktualisierungsergebnisse zu erhalten, die der Vielzahl von Clustern entsprechen, wobei die Abfragedatenschnittstelle eine Zuordnungsdatenstruktur zurückgibt, die Cluster-Kennungen Listen von Tupeln zuordnet, wobei jedes Tupel eine Indikatorelementkennung, einen entsprechenden Indikatorwert und einen Zeitstempel umfasst;
wobei der Zwischenspeicherraum, der dem Ziel-Cluster entspricht, einen Zwischenspeicherbereich umfasst, der dem Lasttyp-Regelelement entspricht, und der Zwischenspeicherbereich, der dem Lasttyp-Regelelement entspricht, als eine Listendatenstruktur implementiert ist, die Zeitstempel von Indikatorwerten speichert, die eine Indikatorbestimmungsbedingung erfüllen, die vom Lasttyp-Regelelement getragen wird;
wobei das Aktualisieren, in Schritt (S4), des Speicherinhalts im Zwischenspeicherraum, der dem Ziel-Cluster entspricht, gemäß dem Indikatorerfassungsergebnis ein Einfügen, in die Listendatenstruktur, von Zeitstempeln von Indikatorwerten, die die Indikatorbestimmungsbedingung während des Abfrageintervalls erfüllen, und wiederholtes Bestimmen, ob der älteste Zeitstempel, der in der Listendatenstruktur gespeichert ist, älter als [ein aktueller Zeitpunkt - der Indikatorerfassungszeitperiode] ist, und Löschen des ältesten Zeitstempels, solange dieser noch älter ist, bis der älteste verbleibende Zeitstempel nicht älter als [der aktuelle Zeitpunkt - der Indikatorerfassungszeitperiode] ist, umfasst; und
wobei Bestimmen, in Schritt (S5), des elastischen Skalierungsentscheidungsfindungsergebnisses, das dem Ziel-Cluster entspricht, ein Bestimmen umfasst, ob das Lasttyp-Regelelement erfüllt ist, indem Zeitstempel, die in der Listendatenstruktur des Zwischenspeicherbereichs, der dem Lasttyp-Regelelement entspricht, gezählt werden und bestimmt wird, dass das Lasttyp-Regelelement erfüllt ist, wenn die Anzahl von Zeitstempeln größer als ein Vorkommnisschwellenwert ist, der von dem Lasttyp-Regelelement getragen wird;
bevor die elastische Skalierungsregel für den Ziel-Cluster erstellt wird, die Cluster-Verwaltungsvorrichtung dazu konfiguriert ist, eine elastische Skalierungsentscheidungsfindungsverarbeitung an mindestens einem zu verwaltenden Cluster unter Verwendung eines selben Abfragemechanismus durchzuführen;
die Auslösezeit einer vorherigen Abfrage sich auf einen Auslösezeitpunkt eines vorherigen Abfrageprozesses im Rahmen des Umfragemechanismus bezieht; und
die Abfrageauslösebedingung sich auf eine im Voraus für den Abfragemechanismus festgelegte Bedingung bezieht und zum Auslösen eines Abfrageprozesses verwendet wird,
wobei das Verfahren ferner ein Lesen, aus einem voreingestellten Zwischenspeicherbereich, einer vorherigen Aufrufzeit der Abfragedatenschnittstelle und Verwenden dieser als die Auslösezeit der vorherigen Abfrage umfasst, und
Speichern, nach einem Aufrufen der Abfragedatenschnittstelle, einer aktuellen Aufrufzeit in dem voreingestellten Zwischenspeicherbereich als die Auslösezeit einer vorherigen Abfrage für einen nachfolgenden Abfrageprozess.

2. Datenverarbeitungsverfahren nach Anspruch 1, wobei das Erhalten von Indikatorerfassungsstatusdaten des Lasttyp-Regelelements innerhalb einer Abschlusszeitspanne gemäß einer Cluster-Kennung des Ziel-Clusters und einer Indikatorelementkennung, die vom Lasttyp-Regelelement getragen wird, Folgendes umfasst:
Übertragen der Cluster-Kennung des Ziel-Clusters, der Indikatorelementkennung, die vom Lasttyp-Regelelement getragen wird, und der Abschlusszeitspanne an eine Datenabschlussschnittstelle und Aufrufen der Datenabschlussschnittstelle, um die Indikatorerfassungsstatusdaten des Lasttyp-Regelelements innerhalb der Abschlusszeitspanne zu erhalten;
und
das Erhalten eines Indikatorerfassungsaktualisierungsergebnisses, das dem Ziel-Cluster entspricht, Folgendes umfasst:
Aufrufen der Abfragedatenschnittstelle, um das Indikatorerfassungsaktualisierungsergebnis zu erhalten, das dem Zielcluster entspricht.

3. Datenverarbeitungsverfahren nach Anspruch 2, wobei
das Aufrufen der Abfragedatenschnittstelle, um das Indikatorerfassungsaktualisierungsergebnis zu erhalten, das dem Zielcluster entspricht, Folgendes umfasst:
Aufrufen der Abfragedatenschnittstelle, um Indikatorerfassungsaktualisierungsergebnisse zu erhalten, die der Vielzahl von Clustern entsprechen;
das Aktualisieren eines Speicherinhalts im Zwischenspeicherraum, der dem Ziel-Cluster entspricht, gemäß dem Indikatorerfassungsaktualisierungsergebnis, das dem Ziel-Cluster entspricht, Folgendes umfasst:
Aktualisieren von Speicherinhalten in Zwischenspeicherräumen, die den Clustern entsprechen, gemäß den Indikatorerfassungsaktualisierungsergebnissen, die den Clustern entsprechen;
und
das Bestimmen eines elastischen Skalierungsentscheidungsfindungsergebnisses, das dem Ziel-Cluster entspricht, gemäß dem Speicherinhalt im Zwischenspeicherraum, der dem Ziel-Cluster entspricht, Folgendes umfasst:
Bestimmen elastischer Skalierungsentscheidungsfindungsergebnisse, die den Clustern entsprechen, gemäß den Speicherinhalten in Zwischenspeicherräumen, die den Clustern entsprechen.

4. Datenverarbeitungsverfahren nach Anspruch 2 oder Anspruch 3, das vor dem Übertragen der Cluster-Kennung des Ziel-Clusters, der Indikatorelementkennung, die vom Lasttyp-Regelelement getragen wird, und der Abschlusszeitspanne an eine Datenabschlussschnittstelle, ferner Folgendes umfasst:
Bestimmen der Abschlusszeitspanne basierend auf der Indikatorerfassungszeitspanne, die vom Lasttyp-Regelelement getragen wird, und der Auslösezeit der vorherigen Abfrage.

5. Datenverarbeitungsverfahren nach einem der Ansprüche 2 bis 4, ferner umfassend:
Aktualisieren der im voreingestellten Zwischenspeicherbereich gespeicherten Daten unter Verwendung der aktuellen Aufrufzeit der Abfragedatenschnittstelle.

6. Datenverarbeitungsverfahren nach einem der Ansprüche 1 bis 5, wobei das Konfigurieren eines Zwischenspeicherraums, der dem Ziel-Cluster entspricht, gemäß der elastischen Skalierungsregel, die für den Ziel-Cluster erstellt wurde, Folgendes umfasst:
Analysieren der elastischen Skalierungsregel, um einen Regelbaum zu erhalten, wobei die elastische Skalierungsregel eine Vielzahl von Regelausdrucksobjekten umfasst; die Vielzahl von Regelausdrucksobjekten das Lasttyp-Regelelement umfassen; und der Regelbaum Knoten umfasst, die der Vielzahl von Regelausdrucksobjekten entsprechen; und
Konfigurieren des Zwischenspeicherraums, der dem Ziel-Cluster entspricht, gemäß dem Regelbaum, wobei der Zwischenspeicherraum Zwischenspeicherbereiche umfasst, die der Vielzahl von Regelausdrucksobjekten entsprechen.

7. Datenverarbeitungsverfahren nach einem der Ansprüche 1 bis 6,
wobei das Speichern der Indikatorerfassungsstatusdaten im Zwischenspeicherraum, der dem Ziel-Cluster entspricht, Folgendes umfasst:
Speichern der Indikatorerfassungsstatusdaten im Zwischenspeicherbereich, der dem Lasttyp-Regelelement entspricht.

8. Datenverarbeitungsverfahren nach einem der Ansprüche 1 bis 7, wobei die elastische Skalierungsregel ferner ein Zeittyp-Regelelement umfasst;
wobei das Datenverarbeitungsverfahren ferner Folgendes umfasst:
Bestimmen, ob eine Auslösezeit einer aktuellen Abfrage innerhalb einer Zeitspanne liegt, die vom Zeittyp-Regelelement gekennzeichnet wird, um ein Bestimmungsergebnis zu erhalten;
und
das Bestimmen eines elastischen Skalierungsentscheidungsfindungsergebnisses, das dem Ziel-Cluster entspricht, gemäß dem Speicherinhalt im Zwischenspeicherraum, der dem Ziel-Cluster entspricht, Folgendes umfasst:
Bestimmen des elastischen Skalierungsentscheidungsfindungsergebnisses, das dem Ziel-Cluster entspricht, gemäß dem Bestimmungsergebnis und dem Speicherinhalt im Zwischenspeicherraum, der dem Ziel-Cluster entspricht.

9. Datenverarbeitungseinrichtung (500), das auf eine Cluster-Verwaltungsvorrichtung angewendet wird und **dadurch gekennzeichnet ist, dass** es Folgendes umfasst:
eine Zwischenspeicherkonfigurationseinheit (501), die für Folgendes konfiguriert ist: nachdem eine elastische Skalierungsregel für einen Ziel-Cluster erstellt wurde, Konfigurieren (S1) eines Zwischenspeicherraums, der dem Ziel-Cluster entspricht, gemäß der elastischen Skalierungsregel, wobei die elastische Skalierungsregel ein Lasttyp-Regelelement umfasst;
eine Datenabschlusseinheit (502), die für Folgendes konfiguriert ist: Erhalten (S2) von Indikatorerfassungsstatusdaten des Lasttyp-Regelelements innerhalb einer Abschlusszeitspanne gemäß einer Cluster-Kennung des Ziel-Clusters und einer Indikatorelementkennung, die vom Lasttyp-Regelelement getragen wird, und Speichern der Indikatorerfassungsstatusdaten im Zwischenspeicherraum, der dem Ziel-Cluster entspricht, wobei die Abschlusszeitspanne basierend auf einer vom Lasttyp-Regelelement getragenen Indikatorerfassungszeitperiode und einer Auslösezeit einer vorherigen Abfrage bestimmt wird und die Abschlusszeitspanne von einer Zeit, die durch Subtrahieren der Indikatorerfassungszeitperiode von der Auslösezeit der vorherigen Abfrage erhalten wird, bis zur Auslösezeit der vorherigen Abfrage geht; und
eine Abfrageaktualisierungseinheit (503), die für Folgendes konfiguriert ist: nach Erhalten von Indikatorerfassungsstatusdaten des Lasttyp-Regelelements innerhalb einer Abschlusszeitspanne gemäß einer Cluster-Kennung des Ziel-Clusters und einer vom Lasttyp-Regelelement getragenen Indikatorelementkennung und Speichern der Indikatorerfassungsstatusdaten im Zwischenspeicherraum, der dem Ziel-Cluster entspricht, Bestimmen (S3), ob eine Abfrageauslösebedingung erfüllt ist, und falls ja (S4), Erhalten eines Indikatorerfassungsaktualisierungsergebnisses, das dem Ziel-Cluster entspricht, und Aktualisieren eines Speicherinhalts im Zwischenspeicherraum, der dem Ziel-Cluster entspricht, gemäß dem Indikatorerfassungsaktualisierungsergebnis, das dem Ziel-Cluster entspricht, wobei das Indikatorerfassungsstatusaktualisierungsergebnis zum Beschreiben einer Indikatorerfassungsstatusaktualisierung verwendet wird, die von der elastischen Skalierungsregel während eines Abfrageintervalls dargestellt wird; und Bestimmen (S5) eines elastischen Skalierungsentscheidungsfindungsergebnisses, das dem Ziel-Cluster entspricht, gemäß dem Speicherinhalt im Zwischenspeicherraum, der dem Ziel-Cluster entspricht, und nach Bestimmen des elastischen Skalierungsentscheidungsfindungsergebnisses, das dem Ziel-Cluster entspricht, Fortsetzen, den Schritt vom Bestimmen, ob die Abfrageauslösebedingung erfüllt ist, durchzuführen,
wobei die Cluster-Verwaltungsvorrichtung so konfiguriert ist, dass sie eine Vielzahl von Clustern verwaltet, die Vielzahl von Clustern den Ziel-Cluster umfassen und Erhalten, in Schritt (S4), des Indikatorerfassungsaktualisierungsergebnisses, das dem Ziel-Cluster entspricht, Aufrufen einer Abfragedatenschnittstelle umfasst, um Indikatorerfassungsaktualisierungsergebnisse zu erhalten, die der Vielzahl von Clustern entsprechen, wobei die Abfragedatenschnittstelle eine Zuordnungsdatenstruktur zurückgibt, die Cluster-Kennungen Listen von Tupeln zuordnet, wobei jedes Tupel eine Indikatorelementkennung, einen entsprechenden Indikatorwert und einen Zeitstempel umfasst;
wobei der Zwischenspeicherraum, der dem Ziel-Cluster entspricht, einen Zwischenspeicherbereich umfasst, der dem Lasttyp-Regelelement entspricht, und der Zwischenspeicherbereich, der dem Lasttyp-Regelelement entspricht, als eine Listendatenstruktur implementiert ist, die Zeitstempel von Indikatorwerten speichert, die eine Indikatorbestimmungsbedingung erfüllen, die vom Lasttyp-Regelelement getragen wird;
wobei Aktualisieren, in Schritt (S4), des Speicherinhalts im Zwischenspeicherraum, der dem Ziel-Cluster entspricht, gemäß dem Indikatorerfassungsergebnis ein Einfügen, in die Listendatenstruktur, von Zeitstempeln von Indikatorwerten, die die Indikatorbestimmungsbedingung während des Abfrageintervalls erfüllen, und wiederholtes Bestimmen, ob der älteste Zeitstempel, der in der Listendatenstruktur gespeichert ist, älter als [ein aktueller Zeitpunkt - der Indikatorerfassungszeitperiode] ist, und Löschen des ältesten Zeitstempels, solange dieser noch älter ist, bis der älteste verbleibende Zeitstempel nicht älter als [der aktuelle Zeitpunkt - der Indikatorerfassungszeitperiode] ist, umfasst; und
wobei Bestimmen, in Schritt (S5), des elastischen Skalierungsentscheidungsfindungsergebnisses, das dem Ziel-Cluster entspricht, ein Bestimmen umfasst, ob das Lasttyp-Regelelement erfüllt ist, indem Zeitstempel, die in der Listendatenstruktur des Zwischenspeicherbereichs, der dem Lasttyp-Regelelement entspricht, gezählt werden und bestimmt wird, dass das Lasttyp-Regelelement erfüllt ist, wenn die Anzahl von Zeitstempeln größer als ein Vorkommnisschwellenwert ist, der von dem Lasttyp-Regelelement getragen wird;
bevor die elastische Skalierungsregel für den Ziel-Cluster erstellt wird, die Cluster-Verwaltungsvorrichtung dazu konfiguriert ist, eine elastische Skalierungsentscheidungsfindungsverarbeitung an mindestens einem zu verwaltenden Cluster unter Verwendung eines selben Abfragemechanismus durchzuführen;
die Auslösezeit einer vorherigen Abfrage sich auf einen Auslösezeitpunkt eines vorherigen Abfrageprozesses im Rahmen des Umfragemechanismus bezieht; und
die Abfrageauslösebedingung sich auf eine im Voraus für den Abfragemechanismus festgelegte Bedingung bezieht und zum Auslösen eines Abfrageprozesses verwendet wird,
wobei die Datenabschlusseinheit ferner dazu konfiguriert ist, aus einem voreingestellten Zwischenspeicherbereich eine vorherige Aufrufzeit der Abfragedatenschnittstelle zu lesen und diese als die Auslösezeit der vorherigen Abfrage zu verwenden und nach einem Aufragen der Abfragedatenschnittstelle eine aktuelle Aufrufzeit im voreingestellten Zwischenspeicherbereich als die Auslösezeit der vorherigen Abfrage für einen nachfolgenden Abfrageprozess zu speichern.

10. Elektronische Vorrichtung, die einen Prozessor und einen Speicher umfasst,
wobei der Speicher so konfiguriert ist, dass er Anweisungen oder ein Computerprogramm speichert; und
der Prozessor so konfiguriert ist, dass er Anweisungen oder das Computerprogramm im Speicher ausführt, um die elektronische Vorrichtung zu veranlassen, das Datenverarbeitungsverfahren nach einem der Ansprüche 1 bis 8 durchzuführen.

11. Computerlesbares Medium, in dem Anweisungen oder ein Computerprogramm gespeichert ist/sind, wobei die Anweisungen oder das Computerprogramm, wenn sie auf einer Vorrichtung laufen, die Vorrichtung veranlasst/veranlassen, das Datenverarbeitungsverfahren nach einem der Ansprüche 1 bis 8 durchzuführen.

## Revendications

1. Procédé de traitement de données, appliqué à un dispositif de gestion de grappes et **caractérisé en ce qu'**il comprend :
suite à la création d'une règle de mise à l'échelle élastique pour une grappe cible, la configuration (S1) d'un espace de mémoire cache correspondant à la grappe cible selon la règle de mise à l'échelle élastique, dans lequel la règle de mise à l'échelle élastique comprend un élément de règle de type charge ;
l'obtention (S2) de données d'état de détection d'indicateur de l'élément de règle de type charge dans une plage de temps d'achèvement selon un identifiant de grappe de la grappe cible et un identifiant d'élément indicateur véhiculé par l'élément de règle de type charge, et le stockage des données d'état de détection d'indicateur dans l'espace de mémoire cache correspondant à la grappe cible, dans lequel la plage de temps d'achèvement est déterminée sur la base d'une période de détection d'indicateur véhiculée par l'élément de règle de type charge et d'un temps de déclenchement de l'interrogation précédente, et la plage de temps d'achèvement s'étend d'un temps, obtenu en soustrayant la période de détection d'indicateur du temps de déclenchement de l'interrogation précédente, au temps de déclenchement de l'interrogation précédente ;
après l'obtention (S2) des données d'état de détection d'indicateur de l'élément de règle de type charge dans une plage de temps d'achèvement en fonction d'un identifiant de grappe de la grappe cible et d'un identifiant d'élément indicateur véhiculé par l'élément de règle de type charge, et le stockage des données d'état de détection d'indicateur dans l'espace de mémoire cache correspondant à la grappe cible, la détermination (S3) pour établir si une condition de déclenchement d'interrogation est remplie, et si tel est le cas (S4), l'obtention d'un résultat de mise à jour de détection d'indicateur correspondant à la grappe cible et la mise à jour d'un contenu de stockage dans l'espace de mémoire cache correspondant à la grappe cible en fonction du résultat de mise à jour de détection d'indicateur correspondant à la grappe cible, dans lequel le résultat de mise à jour de détection d'indicateur sert à décrire une mise à jour d'état de détection d'indicateur présentée par la règle de mise à l'échelle élastique pendant un intervalle d'interrogation ; et
la détermination (S5) d'un résultat décisionnel de mise à l'échelle élastique correspondant à la grappe cible en fonction du contenu de stockage dans l'espace de mémoire cache correspondant à la grappe cible, et suite à la détermination du résultat décisionnel de mise à l'échelle élastique correspondant à la grappe cible, la poursuite de la mise en œuvre de l'étape de détermination (S3) si la condition de déclenchement d'interrogation est remplie,
dans lequel le dispositif de gestion de grappes est configuré pour gérer une pluralité de grappes, la pluralité de grappes comprennent la grappe cible, et l'obtention, à l'étape (S4), du résultat de mise à jour de détection d'indicateur correspondant à la grappe cible comprend l'appel d'une interface de données d'interrogation pour obtenir les résultats de mise à jour de détection d'indicateur correspondant à la pluralité de grappes, l'interface de données d'interrogation renvoyant une structure de données de mise en correspondance mettant en correspondance les identifiants de grappe avec des listes de tuples, chaque tuple comprenant un identifiant d'élément indicateur, une valeur d'indicateur correspondante et un horodatage ;
dans lequel l'espace de mémoire cache correspondant à la grappe cible comprend une zone de mémoire cache correspondant à l'élément de règle de type charge, et la zone de mémoire cache correspondant à l'élément de règle de type charge est implémentée sous forme de structure de données de liste stockant les horodatages des valeurs d'indicateur qui satisfont à une condition de détermination d'indicateur véhiculée par l'élément de règle de type charge ;
dans lequel la mise à jour, à l'étape (S4), du contenu de stockage dans l'espace de mémoire cache correspondant à la grappe cible, en fonction du résultat de mise à jour de détection d'indicateur, comprend l'insertion dans la structure de données de liste des horodatages des valeurs d'indicateur qui satisfont à la condition de détermination d'indicateur pendant l'intervalle d'interrogation, et la détermination répétée pour établir si le plus ancien horodatage stocké dans la structure de données de liste est antérieur à [un temps courant - la période de détection d'indicateur], et la suppression du plus ancien horodatage s'il est plus ancien, jusqu'à ce que le plus ancien horodatage restant ne soit pas antérieur à [le temps courant - la période de détection d'indicateur] ; et
dans lequel la détermination, à l'étape (S5), du résultat décisionnel de mise à l'échelle élastique correspondant à la grappe cible comprend la détermination pour établir si l'élément de règle de type charge est respecté en comptant les horodatages stockés dans la structure de données de liste de la zone de mémoire cache correspondant à l'élément de règle de type charge et la détermination que l'élément de règle de type charge est respecté lorsque le nombre d'horodatages est supérieur à un seuil d'occurrence véhiculé par l'élément de règle de type charge ;
avant la création de la règle de mise à l'échelle élastique pour la grappe cible, le dispositif de gestion de grappes est configuré pour effectuer un traitement décisionnel de mise à l'échelle élastique sur au moins une grappe à gérer à l'aide d'un même mécanisme d'interrogation ;
le temps de déclenchement de l'interrogation précédente fait référence à un moment de déclenchement d'un processus d'interrogation précédent dans le cadre du mécanisme d'interrogation ; et
la condition de déclenchement d'interrogation fait référence à une condition définie préalablement pour le mécanisme d'interrogation et servant à déclencher un processus d'interrogation,
dans lequel le procédé comprend en outre la lecture, à partir d'une zone de mémoire cache prédéfinie, d'un précédent temps d'appel de l'interface de données d'interrogation et son utilisation en tant que dit temps de déclenchement de l'interrogation précédente, et
le stockage, après appel de l'interface de données d'interrogation, d'un temps d'appel courant dans la zone de mémoire cache prédéfinie en tant que temps de déclenchement d'interrogation précédente pour un processus d'interrogation ultérieur.

2. Procédé de traitement de données selon la revendication 1, dans lequel l'obtention des données d'état de détection d'indicateur de l'élément de règle de type charge dans une plage de temps d'achèvement en fonction d'un identifiant de grappe de la grappe cible et d'un identifiant d'élément indicateur véhiculé par l'élément de règle de type charge comprend :
le transfert de l'identifiant de grappe de la grappe cible, l'identifiant d'élément indicateur véhiculé par l'élément de règle de type charge et la plage de temps d'achèvement à une interface d'achèvement de données, et l'appel de l'interface d'achèvement de données pour obtenir les données d'état de détection d'indicateur de l'élément de règle de type charge dans la plage de temps d'achèvement ;
et
l'obtention d'un résultat de mise à jour de détection d'indicateur correspondant à la grappe cible comprend :
l'appel de l'interface de données d'interrogation pour obtenir le résultat de mise à jour de détection d'indicateur correspondant à la grappe cible.

3. Procédé de traitement de données selon la revendication 2, dans lequel
l'appel de l'interface de données d'interrogation pour obtenir le résultat de mise à jour de détection d'indicateur correspondant à la grappe cible comprend :
l'appel de l'interface de données d'interrogation pour obtenir des résultats de mise à jour de détection d'indicateur correspondant à la pluralité de grappes ;
la mise à jour d'un contenu de stockage dans l'espace de mémoire cache correspondant à la grappe cible, en fonction du résultat de mise à jour de détection d'indicateur correspondant à la grappe cible, comprend :
la mise à jour du contenu de stockage dans les espaces de mémoire cache correspondant aux grappes en fonction des résultats de mise à jour de détection d'indicateur correspondant aux grappes ;
et
la détermination d'un résultat décisionnel de mise à l'échelle élastique correspondant à la grappe cible en fonction du contenu de stockage dans l'espace de mémoire cache correspondant à la grappe cible comprend :
la détermination des résultats décisionnels de mise à l'échelle élastique correspondant aux grappes en fonction du contenu de stockage dans les espaces cache correspondants aux grappes.

4. Procédé de traitement de données selon la revendication 2 ou la revendication 3, avant le transfert de l'identifiant de grappe de la grappe cible, de l'identifiant d'élément indicateur véhiculé par l'élément de règle de type charge et de la plage de temps d'achèvement à une interface d'achèvement de données, comprenant en outre :
la détermination de la plage de temps d'achèvement en fonction de la période de détection d'indicateur véhiculée par l'élément de règle de type charge et du temps de déclenchement de l'interrogation précédente.

5. Procédé de traitement de données selon l'une quelconque des revendications 2 à 4, comprenant en outre :
la mise à jour des données stockées dans la zone de mémoire cache prédéfinie en utilisant le temps d'appel courant de l'interface de données d'interrogation.

6. Procédé de traitement de données selon l'une quelconque des revendications 1 à 5, dans lequel la configuration d'un espace de mémoire cache correspondant à la grappe cible selon la règle de mise à l'échelle élastique créée pour la grappe cible comprend :
l'analyse de la règle de mise à l'échelle élastique pour obtenir une arborescence de règles, dans lequel la règle de mise à l'échelle élastique comprend une pluralité d'objets d'expression de règle ; la pluralité d'objets d'expression de règle comprennent l'élément de règle de type charge ; et l'arborescence de règles comprend des nœuds correspondant à la pluralité d'objets d'expression de règle ; et
la configuration de l'espace de mémoire cache correspondant à la grappe cible selon l'arborescence de règles, dans lequel l'espace de mémoire cache comprend des zones de mémoire cache correspondant à la pluralité d'objets d'expression de règle.

7. Procédé de traitement de données selon l'une quelconque des revendications 1 à 6,
le stockage des données d'état de détection d'indicateur dans l'espace de mémoire cache correspondant à la grappe cible comprend :
le stockage des données d'état de détection d'indicateur dans la zone de mémoire cache correspondant à l'élément de règle de type charge.

8. Procédé de traitement de données selon l'une quelconque des revendications 1 à 7, dans lequel la règle de mise à l'échelle élastique comprend en outre un élément de règle de type temps ;
dans lequel le procédé de traitement des données comprend :
la détermination pour établir si le temps de déclenchement de l'interrogation courante se situe dans une plage de temps **caractérisée par** l'élément de règle de type temps afin d'obtenir un résultat de détermination ;
et
la détermination d'un résultat décisionnel de mise à l'échelle élastique correspondant à la grappe cible en fonction du contenu de stockage dans l'espace de mémoire cache correspondant à la grappe cible comprend :
la détermination du résultat décisionnel de mise à l'échelle élastique correspondant à la grappe cible en fonction du résultat de la détermination et du contenu de stockage dans l'espace de mémoire cache correspondant à la grappe cible.

9. Appareil de traitement de données (500), appliqué à un dispositif de gestion de grappes et **caractérisé en ce qu'**il comprend :
une unité de configuration de mémoire cache (501) configurée pour : suite à la création d'une règle de mise à l'échelle élastique pour une grappe cible, configurer (S1) un espace de mémoire cache correspondant à la grappe cible selon la règle de mise à l'échelle élastique, dans lequel la règle de mise à l'échelle élastique comprend un élément de règle de type charge ;
une unité d'achèvement de données (502) configurée pour : obtenir (S2) les données d'état de détection d'indicateur de l'élément de règle de type charge dans une plage de temps d'achèvement en fonction d'un identifiant de grappe de la grappe cible et d'un identifiant d'élément d'indicateur véhiculé par l'élément de règle de type charge, et stocker les données d'état de détection d'indicateur dans l'espace de mémoire cache correspondant à la grappe cible, dans lequel la plage de temps d'achèvement est déterminée en fonction d'une période de détection d'indicateur véhiculée par l'élément de règle de type charge et d'un temps de déclenchement de l'interrogation précédente, et la plage de temps d'achèvement s'étend d'un temps, obtenu en soustrayant la période de détection d'indicateur du temps de déclenchement de l'interrogation précédente, au temps de déclenchement de l'interrogation précédente ; et
une unité de mise à jour par interrogation (503) est configurée pour : après avoir obtenu les données d'état de détection d'indicateur de l'élément de règle de type charge dans une plage de temps d'achèvement, en fonction d'un identifiant de grappe de la grappe cible et d'un identifiant d'élément indicateur véhiculé par l'élément de règle de type charge, et stocké les données d'état de détection d'indicateur dans l'espace de mémoire cache correspondant à la grappe cible, déterminer (S3) si une condition de déclenchement d'interrogation est remplie, et si tel est le cas (S4), obtenir un résultat de mise à jour de détection d'indicateur correspondant à la grappe cible et mettre à jour un contenu de stockage dans l'espace de mémoire cache correspondant à la grappe cible en fonction du résultat de mise à jour de détection d'indicateur correspondant à la grappe cible, dans lequel le résultat de mise à jour de détection d'indicateur sert à décrire une mise à jour d'état de détection d'indicateur présentée par la règle de mise à l'échelle élastique pendant un intervalle d'interrogation ; et déterminer (S5) un résultat décisionnel de mise à l'échelle élastique correspondant à la grappe cible en fonction du contenu de stockage dans l'espace de mémoire cache correspondant à la grappe cible, et après avoir déterminé le résultat décisionnel de mise à l'échelle élastique correspondant à la grappe cible, poursuivre l'exécution de l'étape de détermination pour établir si la condition de déclenchement d'interrogation est satisfaite,
dans lequel le dispositif de gestion de grappes est configuré pour gérer une pluralité de grappes, la pluralité de grappes comprennent la grappe cible, et l'obtention, à l'étape (S4), du résultat de mise à jour de détection d'indicateur correspondant à la grappe cible comprend l'appel d'une interface de données d'interrogation pour obtenir les résultats de mise à jour de détection d'indicateur correspondant à la pluralité de grappes, l'interface de données d'interrogation renvoyant une structure de données de mise en correspondance mettant en correspondance les identifiants de grappe avec des listes de tuples, chaque tuple comprenant un identifiant d'élément indicateur, une valeur d'indicateur correspondante et un horodatage ;
dans lequel l'espace de mémoire cache correspondant à la grappe cible comprend une zone de mémoire cache correspondant à l'élément de règle de type charge, et la zone de mémoire cache correspondant à l'élément de règle de type charge est implémentée sous forme de structure de données de liste stockant les horodatages des valeurs d'indicateur qui satisfont à une condition de détermination d'indicateur véhiculée par l'élément de règle de type charge ;
dans lequel la mise à jour, à l'étape (S4), du contenu de stockage dans l'espace de mémoire cache correspondant à la grappe cible, en fonction du résultat de mise à jour de détection d'indicateur, comprend l'insertion dans la structure de données de liste des horodatages des valeurs d'indicateur qui satisfont à la condition de détermination d'indicateur pendant l'intervalle d'interrogation, et la détermination répétée pour établir si le plus ancien horodatage stocké dans la structure de données de liste est antérieur à [un temps courant - la période de détection d'indicateur], et la suppression du plus ancien horodatage s'il est plus ancien, jusqu'à ce que le plus ancien horodatage restant ne soit pas antérieur à [le temps courant - la période de détection d'indicateur] ; et
dans lequel la détermination, à l'étape (S5), du résultat décisionnel de mise à l'échelle élastique correspondant à la grappe cible comprend la détermination pour établir si l'élément de règle de type charge est respecté en comptant les horodatages stockés dans la structure de données de liste de la zone de mémoire cache correspondant à l'élément de règle de type charge et la détermination que l'élément de règle de type charge est respecté lorsque le nombre d'horodatages est supérieur à un seuil d'occurrence véhiculé par l'élément de règle de type charge ;
avant la création de la règle de mise à l'échelle élastique pour la grappe cible, le dispositif de gestion de grappes est configuré pour effectuer un traitement décisionnel de mise à l'échelle élastique sur au moins une grappe à gérer à l'aide d'un même mécanisme d'interrogation ;
le temps de déclenchement de l'interrogation précédente fait référence à un moment de déclenchement d'un processus d'interrogation précédent dans le cadre du mécanisme d'interrogation ; et
la condition de déclenchement d'interrogation fait référence à une condition définie préalablement pour le mécanisme d'interrogation et servant à déclencher un processus d'interrogation,
dans lequel l'unité d'achèvement de données est en outre configurée pour lire, à partir d'une zone de mémoire cache prédéfinie, un temps d'appel précédent de l'interface de données d'interrogation et l'utiliser en tant qu'instant de déclenchement de l'interrogation précédente, et pour stocker, après avoir appelé l'interface de données d'interrogation, un temps d'appel courant dans la zone de mémoire cache prédéfinie en tant que temps de déclenchement de l'interrogation précédente pour un processus d'interrogation ultérieur.

10. Dispositif électronique, comprenant un processeur et une mémoire,
dans lequel la mémoire est configurée pour stocker des instructions ou un programme informatique ; et
le processeur est configuré pour exécuter les instructions ou le programme informatique dans la mémoire pour amener le dispositif électronique à mettre en œuvre le procédé de traitement de données selon l'une quelconque des revendications 1 à 8.

11. Support lisible par ordinateur sur lequel des instructions ou un programme informatique sont stockés, dans lequel les instructions ou le programme informatique, lorsqu'ils sont exécutés sur un dispositif, amènent le dispositif à exécuter le procédé de traitement des données selon l'une quelconque des revendications 1 à 8.
